(19) Europäisches Patentamt
European Patent Office
Office européen des brevets

(11) EP 0 519 032 B1

(12) **EUROPEAN PATENT SPECIFICATION**

(45) Date of publication and mention of the grant of the patent:
**08.09.1999 Bulletin 1999/36**

(21) Application number: **92901642.6**

(22) Date of filing: **07.01.1992**

(51) Int Cl.[6]: **C08K 5/3435**, C09D 7/12

(86) International application number:
**PCT/EP92/00023**

(87) International publication number:
**WO 92/12201 (23.07.1992 Gazette 1992/19)**

# (54) MIXTURES OF HALS COMPOUNDS

MISCHUNGEN VON HALS-VERBINDUNGEN

MELANGES DE COMPOSES HALS

(84) Designated Contracting States:
**CH DE FR GB IT LI**

(30) Priority: **07.01.1991 GB 9100257**

(43) Date of publication of application:
**23.12.1992 Bulletin 1992/52**

(73) Proprietor: **Clariant Finance (BVI) Limited
Road Town, Tortola (VG)**

(72) Inventors:
- **BECHTOLD, Karl
D-7846 Schliengen (DE)**
- **LIGNER, Gilbert
F-68920 Wintzenheim (FR)**
- **WOLF, Rainer
CH-4123 Allschwil (CH)**

(74) Representative: **D'haemer, Jan Constant et al
Clariant International Ltd.,
Rothausstrasse 61
4132 Muttenz 1 (CH)**

(56) References cited:
**EP-A- 0 309 402**
**CH-A- 665 216**
**US-A- 4 730 017**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 519 032 B1

## Description

The invention relates to novel mixtures of tetraalkylpiperidine compounds (HALS compounds), suitable as light stabilisers in polymeric systems especially in acid catalysed polymeric systems.

According to the invention there is provided a composition, suitable for stabilising a polymeric composition against the effects of light, comprising

a) an N-acylated 2,2,6,6-tetraalkylpiperidinyl group (hereinafter N-acylated HALS) containing compound; and
b) an N-oxy-substituted 2,2,6,6-tetraalkylpiperidinyl group (hereinafter N-oxy-substituted HALS) containing compound.

The term "oxy-substituted" includes substitution with any of the significances of $R_b$ below including preferably oxyalkylation. Surprisingly it has been found that by mixing an N-acylated HALS with an N-oxyalkylated HALS that a synergistic effect occurs in that the stability to light of lacquers containing a mixture of N-acylated HALS and N-oxyalkylated HALS is significantly improved over lacquers with either the N-acylated HALS or the N-oxyalkylated HALS alone.

Further according to the invention there is provided a mixture comprising

a) 5-95% by weight of a compound containing a group of formula I (hereinafter defined as component a)

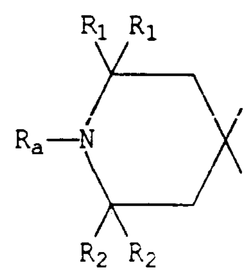

(I)

b) 5-95% by weight of a compound containing a group of formula II

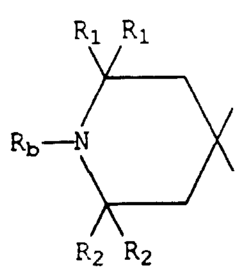

(II)

(hereinafter defined as component b))
in which

$R_a$ is -CO-$R_5$,

where $R_5$ is $C_{2-8}$alkenyl, -C($R_3$)=$CH_2$, $C_{1-22}$alkyl, phenyl, -CO-phenyl, -$NR_7R_8$, -$CH_2$-$C_6H_5$, -CO-O$C_{1-12}$alkyl or -COOH; $R_7$ is hydrogen, $C_{1-12}$alkyl, $C_{5-6}$cycloalkyl, phenyl, phenyl-$C_{1-4}$ alkyl or $C_{1-12}$alkylphenyl and $R_8$ is $C_{1-12}$alkyl or hydrogen, and

$R_b$ is oxygen; OH; -O-CO-$R_5$; -O-$C_{1-8}$alkyl; -O-CO-phenyl; -O-$C_{2-8}$alkenyl; -O-$C_{3-18}$alkynyl; -O-$C_{5-12}$cyclo alkyl;

$-O-C_{6-10}$bicycloalkyl; $-O-C_{5-8}$cyclo alkenyl, $-O-C_{6-10}$aryl, $-O-R_{30}$ where $R_{30}$ is $C_{7-9}$alkaryl unsubstituted or monosubstituted by $C_{1-4}$alkyl or aryl; where $R_5$ is $C_{2-8}$alkenyl, $-C(R_3)=CH_2$ (preferably), $C_{1-22}$alkyl, phenyl, -CO-phenyl, $-NR_7R_8$, $-CH_2-C_6H_5$, $-CO-OC_{1-12}$alkyl or -COOH;

$R_3$ is hydrogen or $C_{1-4}$alkyl;

each $R_1$, independently, is $-CH_3$ or $-CH_2(C_{1-4}alkyl)$ or both groups $R_1$ form a group $-(CH_2)_5-$; and

each $R_2$, independently, is $-CH_3$ or $-CH_2(C_{1-4}alkyl)$ or both groups $R_2$ from a group $-(CH_2)_5-$;

the percentages being based on the amount of component a) and b) in the mixture.

Preferably $R_3$ is hydrogen.

Preferably $R_5$ is $R_5'$ where $R_5'$ is $-CH=CH_2$, $C_{1-8}$alkyl, $-COOC_{1-8}$alkyl, $C_{2-8}$alkenyl or phenyl.

Preferably component a) is a compound of formula III

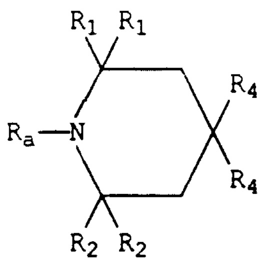

(III)

in which

$R_a$ is $-CO-R_5$; and

each $R_4$ independently is selected from hydrogen, a hydroxy group, an ether group, an amine and amide forming group, an ester and ester forming group and a urea and urethane forming group; or both groups $R_4$ together with the C atom to which they are attached form a spiro group; and the other symbols are as described above.

Preferably component b) is a compound of formula IV

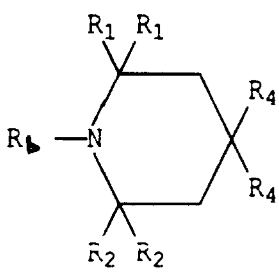

(IV)

in which

$R_b$ is oxygen; OH; $-O-CO-R_5$; $-O-C_{1-8}$alkyl; -O-CO-phenyl; $-O-C_{2-8}$alkenyl; $-O-C_{3-18}$alkynyl; $-O-C_{5-12}$cyclo alkyl; $-O-C_{6-10}$bicycloalkyl; $-O-C_{5-8}$cyclo alkenyl, $-O-C_{6-10}$aryl, $-O-R_{30}$ where $R_{30}$ is $C_{7-9}$alkaryl unsubstituted or monosubstituted by $C_{1-4}$alkyl or aryl; and

each $R_4$ independently is selected from hydrogen, a hydroxy and ether group, an amine and amide forming group, an ester and ester forming group and a urea and urethane forming group; or both groups $R_4$ together with the C atom to which they are attached form a spiro group; and the other symbols are as described above.

Further according to the invention there is provided a composition, suitable for stabilising a polymeric composition against the effects of light, comprising

a) an N-acylated 2,2,6,6-tetraalkylpiperidinyl-group-containing compound in which a spiro group is attached in the 4-position (hereinafter defined as component i); and

b) an N-acylated 2,2,6,6-tetraalkylpiperidinyl-group-containing compound in which in the 4- position no spiro group is present (hereinafter defined as component ii).

The above composition provides significant improvements in gloss retention and reduced cracking which occurs in polymeric material containing only the individual components.

It has been surprisingly found that by mixing two N-acylated HALS compounds, components i) and ii), that a synergistic improvement in light fastness also occurs in acid catalysed systems.

Preferred compounds of component i) are of formula V

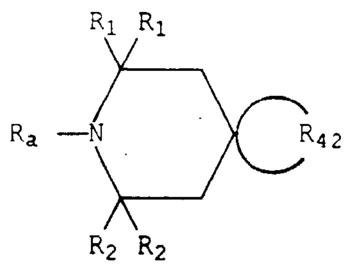

(V)

in which

$R_a$ is -CO-$R_5$; and

$R_{42}$ together with the C atom to which it is attached forms a spiro group; and the other symbols are as defined above.

Preferred compounds of component ii) are of formula VI

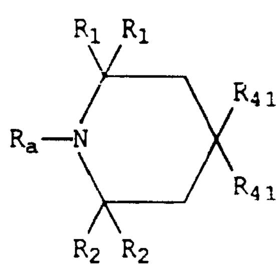

(VI)

where each $R_{41}$ independently is selected from hydrogen, an amine and amide forming group, an ester and ester forming group and a urea and urethane forming group; and $R_1$, $R_2$ and $R_a$ are as defined above.

Preferably the amount of component a) (or component i) is 20-80%, more preferably 30-70%, most preferably 40-60%. Preferably the amount of component b) (or component ii) respectively) is 20-80%, more preferably 30-70%, most preferably 40-60%.

Preferred compounds of formula III are those of formula IIIa to IIIn

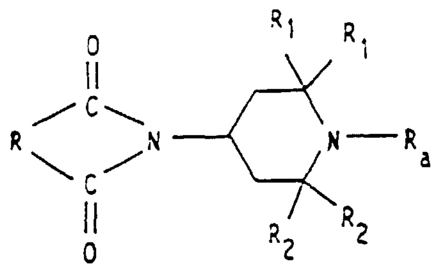

(IIIa)

in which R is a saturated or unsaturated optionally alkyl or alkenyl substituted alkylene or cycloalkylene radical having 2-20 carbon atoms; and the other symbols are as defined above;

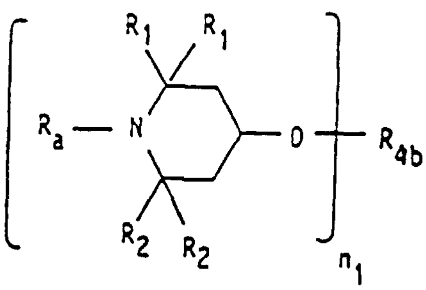

(IIIb)

where $n_1$ is a number from 1-4 inclusive, preferably 1 or 2;

$R_a$ , $R_1$ and $R_2$ are as defined above;

$R_{4b}$, when $n_1$=1, is hydrogen; $C_{1-18}$ alkyl, optionally interrupted by one or more oxygen atoms; cyanoethyl; benzyl, glycidyl; a monovalent radical of an aliphatic, cycloaliphatic, araliphatic or aromatic carboxylic acid or of a carbamic acid; or of a phosphorus-containing acid or a monovalent silyl radical, preferably a radical of an aliphatic carboxylic acid having 2-18 carbon atoms, of a cyloaliphatic carboxylic acid having 5-12 carbon atoms or of an aromatic carboxylic acid having 7-15 carbon atoms;

$R_{4b}$, when $n_1$ is 2, is $C_{1-12}$alkylene, $C_{4-12}$alkenylene, xylylene, a bivalent radical of an aliphatic, cycloaliphatic, araliphatic or aromatic dicarboxylic acid or of a dicarbamic acid or of a phosphorus-containing acid, or a bivalent silyl radical, preferably a radical of an aliphatic dicarboxylic acid having 2-36 C atoms, of a cycloaliphatic or aromatic dicarboxylic acid having 8-14 C atoms, or of an aliphatic, cycloaliphatic or aromatic dicarbamic acid having 8-14 C atoms;

$R_{4b}$ , when $n_1$ is 3, is a trivalent radical of an aliphatic, cycloaliphatic or aromatic tricarboxylic acid, of an aromatic tricarbamic acid or of a phosphorus-containing acid, or a trivalent silyl radical; and

$R_{4b}$, when $n_1$ is 4, is a tetravalent radical of an aliphatic, cycloaliphatic or aromatic tetracarboxylic acid;

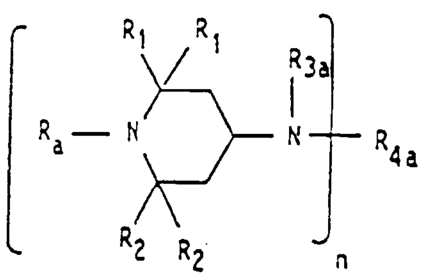

(IIIc)

where n is the number 1 or 2;

$R_a$, $R_1$ and $R_2$ are as defined above;

$R_{3a}$ is hydrogen, $C_{1-12}$alkyl, $C_{5-7}$cycloalkyl, $C_{7-8}$aralkyl, $C_{2-18}$alkanoyl, $C_{3-5}$alkenoyl, benzoyl or a group of the formula $CH_2$-CH(OH)-Z or of the formula -CONH-Z wherein Z is hydrogen, methyl or phenyl;

$R_{4a}$, when n is 1, is hydrogen, $C_{1-18}$alkyl, $C_{5-7}$cycloalkyl, $C_{2-8}$alkenyl unsubstituted or substituted by a cyano, carbonyl or carbamide group, or it is glycidyl, a group of the formula -$CH_2$-CH(OH)-Z or of the formula -CONH-Z wherein Z is hydrogen, methyl or phenyl:

$R_{4a}$, when n is 2, is $C_{2-12}$alkylene, $C_{6-12}$arylene, xylylene, a -$CH_2$-CH(OH)-$CH_2$- group or a -$CH_2$-CH(OH)-$CH_2$-O-X-O-$CH_2$-CH(OH)-$CH_2$-group wherein X is $C_{2-10}$alkylene, $C_{6-15}$arylene or $C_{6-12}$ cycloalkylene; or, provided that $R_{3a}$ is not alkanoyl, alkenoyl or benzoyl, $R_{4a}$ can also be a bivalent radical of an aliphatic, cycloaliphatic or aromatic dicarboxylic acid or of a dicarbamic acid, or can be the group -CO- or $R_{3a}$ and $R_{4a}$ together, when n is 1, can be the cyclic radical of an aliphatic or aromatic 1,2- or 1,3-dicarboxylic acid;

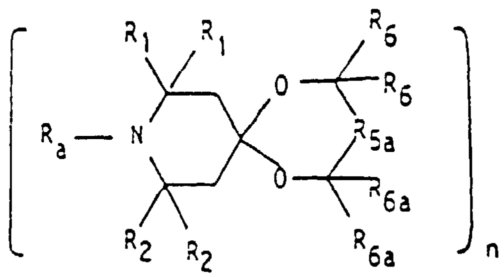

(IIId)

where n is the number 1 or 2;

$R_a$, $R_1$ and $R_2$ are as defined above;

$R_{5a}$ , when n is 1, is $C_{2-8}$alkylene or hydroxyalkylene or $C_{4-22}$acyloxyalkylene;

$R_{5a}$, when n is 2, is the group $(-CH_2)_2C(CH_2-)_2$;

$R_6$ is hydrogen or both groups $R_6$ form a group = 0;

$R_{6a}$ is hydrogen or both groups $R_{6a}$ form a group = 0;

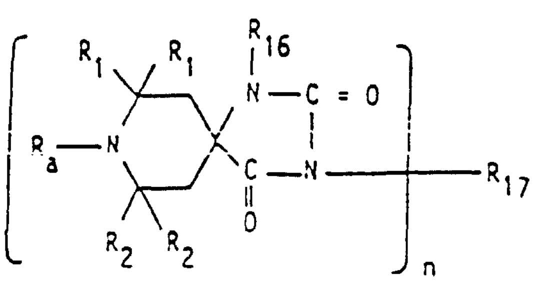

(IIIe)

where n is the number 1 or 2;

$R_a$, $R_1$ and $R_2$ are as defined above;

$R_{16}$ is hydrogen, $C_{1-12}$alkyl, allyl, benzyl, glycidyl or $C_{2-6}$alkoxyalkyl;

$R_{17}$, when n is 1, is hydrogen, $C_{1-12}$alkyl, $C_{3-5}$alkenyl, $C_{7-9}$aralkyl, $C_{5-7}$cycloalkyl, $C_{2-4}$hydroxyalkyl, $C_{2-6}$alkoxyalkyl, $C_{6-10}$aryl, glycidyl, a group of the formula $-(CH_2)_m-COO-Q$ or of the formula $-(CH_2)_m-Q-CO-Q$ wherein m is 1 or 2, and Q iS $C_{1-22}$alkyl, $C_{2-22}$alkenyl or phenyl; or a group of the formula $-CH_2-CH(CH_3)-COO-Q$ or of the formula $-CH_2-CH(CH_3)-O-CO-Q$ and Q is as defined above;

$R_{17}$, when n is 2, is $C_{2-12}$alkylene, $C_{6-12}$arylene, a group $-CH_2-CH(OH)-CH_2-0-X-CH_2-CH(OH)-CH_2-$ wherein X iS $C_{2-10}$alkylene, $C_{6-15}$arylene or $C_{6-12}$cycloalkylene, or a group $-CH_2CH-(OZ')CH_2-(OCH_2-CH(OZ')-CH_2)_2$ wherein Z' is hydrogen, $C_{1-18}$alkyl, allyl, benzyl, $C_{2-12}$alkanoyl or benzoyl; or a divalent radical of an aliphatic, cycloaliphatic, araliphatic or aromatic dicarboxylic acid;

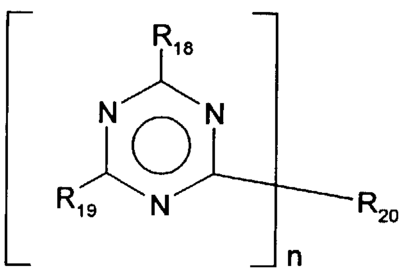

(III f)

where n is the number 1 or 2;

$R_{18}$ is a group of the formula

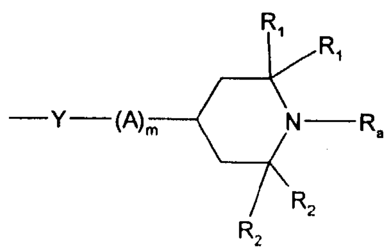

where $R_a$, $R_1$ and $R_2$ are as defined above;

Y is -O-; $-NR_{21}-$; or $-NR_{21}-CO-CO-NR_{21}-$;

A is $C_{2-6}$alkylene;

m is the number 0 or 1;

$R_{19}$ is selected from one of the groups $-R_{18}$,

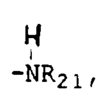

$-R_{22}$, $-OR_{23}$, $-NHCH_2OR_{23}$ and $-N(CH_2OR_{23})_2$;

$R_{20}$, when n is 1, is a group selected from $R_{18}$ and $R_{19}$;

$R_{20}$, when n is 2, is the group-Y-$Q_1$-Y-,

where $Q_1$ is $C_{2-6}$alkylene optionally interrupted by -N($R_{24}$)-;

$R_{21}$ is hydrogen, C1-12alkyl, cyclohexyl, benzyl or $C_{1-4}$hydroxyalkyl, or a group of the formula

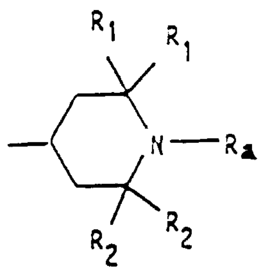

$R_{22}$ is $C_{1-12}$alkyl, cyclohexyl, benzyl or $C_{1-4}$hydroxyalkyl;

$R_{23}$ is hydrogen, $C_{1-12}$alkyl or phenyl;

$R_{24}$ is hydrogen or the group -$CH_2OR_{23}$;

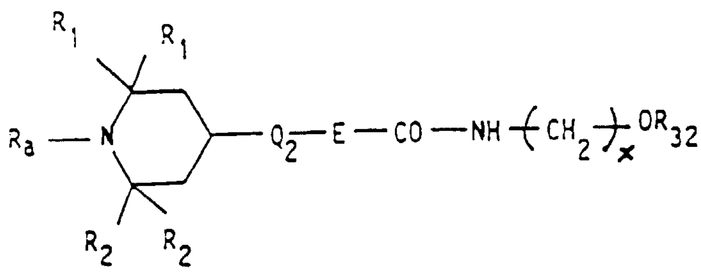

(IIIg)

x is an integer from 1 to 6 inclusive;

$R_a$, $R_1$ and $R_2$ are as defined above;

where $Q_2$ is -N($R_{31}$)- or -O-;

E is $C_{1-3}$ alkylene, the group -$CH_2$-CH($R_{34}$)-O- where $R_{34}$ is hydrogen, methyl or phenyl, the group -$(CH_2)_3$-NH- or a single bond or -CO-;

$R_a$ is as defined above;

$R_{32}$ is hydrogen or $C_{1-18}$alkyl;

$R_{31}$ is hydrogen, $C_{1-18}$alkyl, $C_{5-7}$cycloalkyl, $C_{7-12}$aralkyl, cyanoethyl, $C_{6-10}$aryl, the group -$CH_2$-CH($R_{4a}$)-OH where $R_{4a}$ has the meaning defined above (when n=1), a group of the formula

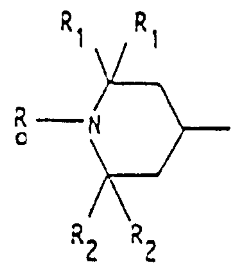

$R_o$ has the significance of $R_a$, or $R_{31}$ is a group of the formula

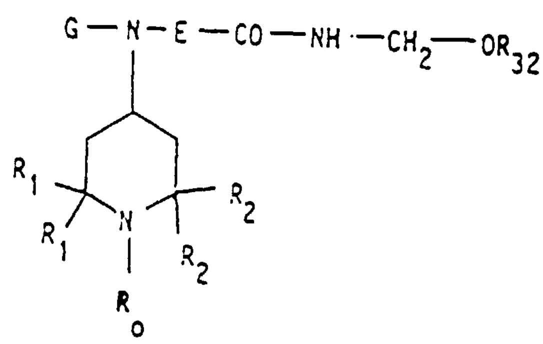

where G can be $C_{2-6}$alkylene or $C_{6-12}$arylene and E, $R_a$, $R_1$, $R_2$, $R_0$ and $R_{32}$ are as defined above;

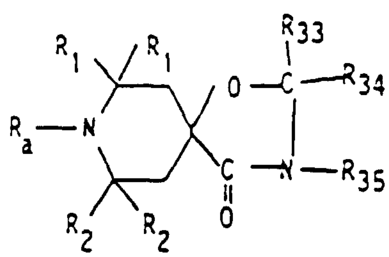

(IIIh)

where $R_a$, $R_1$ and $R_2$ are as defined above;

$R_{33}$ and $R_{34}$ independently are hydrogen, $C_{1-30}$alkyl or benzyl or $R_{33}$ is hydrogen or $C_{1-4}$alkyl and $R_{34}$ is phenyl, ($C_{1-4}$alkyl) phenyl, chlorophenyl, 4-hydroxy-3,5-t-butylphenyl or naphthyl; or $R_{33}$ and $R_{34}$ together with the carbon atoms to which they are attached form a $C_{5-15}$cycloalkylidene ring which may be unsubstituted or substituted by one $C_{1-4}$alkyl group or form a group of formula

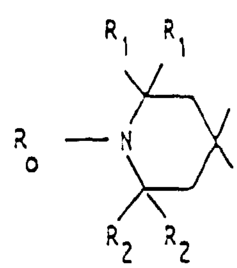

$R_{35}$ is hydrogen, $C_{1-20}$alkyl, $C_{2-20}$alkenyl or -CH($R_{36}$)-CH($R_{37}$)-COO$R_{38}$ where $R_{36}$ is hydrogen, methyl, phenyl or -COO$C_{1-21}$alkyl;

$R_o$ is as defined above;

$R_{37}$ is hydrogen or methyl and $R_{38}$ is hydrogen, a $C_{1-21}$alkyl or $C_{2-22}$alkenyl group which may be unsubstituted or monosubstituted by phenyl or naphthyl and which may be interrupted by oxygen or by a $C_{1-4}$alkylimine group; phenyl; (C1-12alkyl) phenyl; $C_{5-12}$cycloalkyl or a saturated aliphatic hydrocarbon residue having 2-20 carbon atoms which may be interrupted by oxygen or by a $C_{1-4}$alkylimine group and which is substituted by 1 to 3 groups selected from ($C_{1-21}$alkyl)COO-and groups of the formula

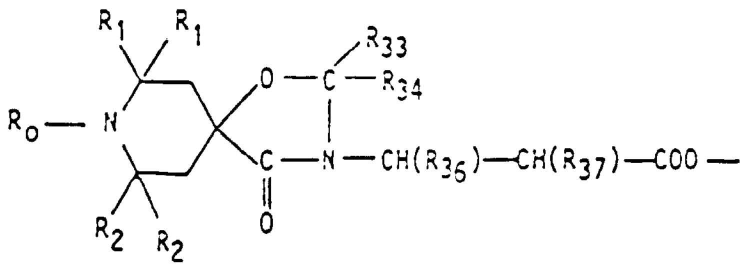

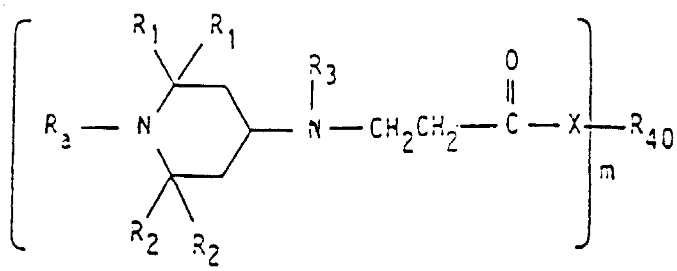

(IIIi)

in which $R_a$, $R_1$, $R_2$ and $R_3$ are as defined above;

X is -O-, -NH- or -N($C_{1-4}$alkyl)- and

$R_{40}$ is a saturated or unsaturated aliphatic group unsubstituted or substituted by one or two groups selected from-OH and $C_{1-4}$alkoxy and which can be interrupted by an oxygen or sulphur atom; or an aromatic group, unsubstituted or substituted by one or two groups selected from -OH, $C_{1-4}$alkyl and $C_{1-4}$alkoxy;

m is an integer of from 1 to 4 inclusive;

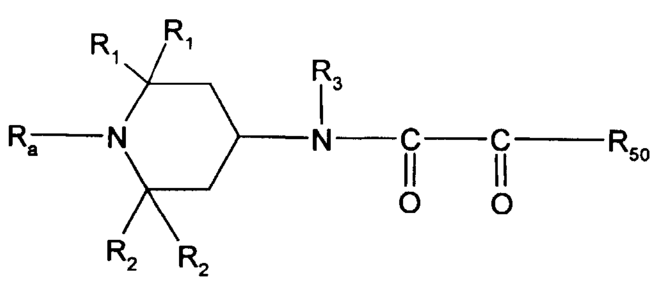

(III j)

where $R_a$, $R_1$, $R_2$ and $R_3$ are as defined above and $R_{50}$ is an amide or ester forming group.

Preferably $R_{50}$ is an amide forming group of the formula $-N(R_3)-R_{51}$, where $R_{51}$ is an aliphatic, cycloaliphatic, aromatic or heterocyclic (non-aromatic or aromatic) group, all of which may bear substituents (preferably 1 to 3) selected from $C_{1-4}$alkoxy, $C_{1-12}$alkyl, $C_{1-12}$alkyl -mercapto, $C_{1-12}$alkylamino, phenoxy, phenyl mercapto, phenylamino, acryloyloxy, methacryloyloxy and 2,2,6,6-tetraalkylpiperidine groups or oxalamido or acyloxy groups which may be further substituted by 2,2,6,6-tetraalkylpiperidine group;

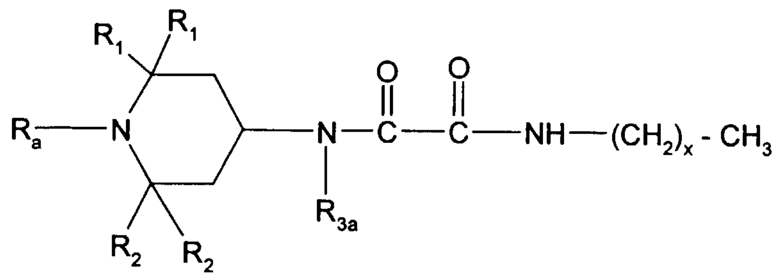

(III k)

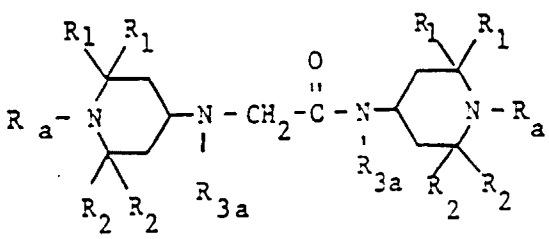

(IIIl)

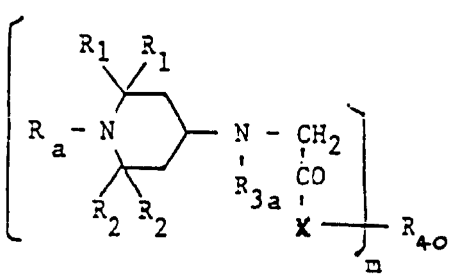

(IIIm)

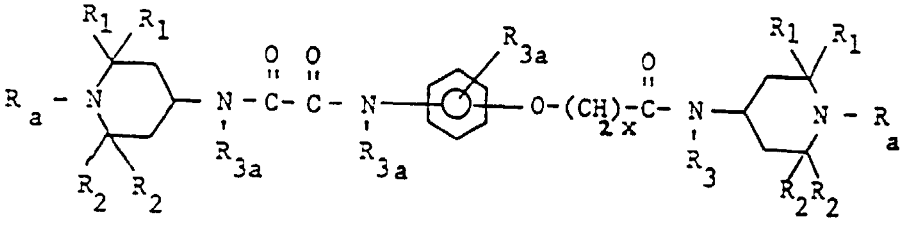

(IIIn)

where the symbols are as defined above.

Compounds containing groups of formula II are described in EP 309,402.

Compounds of formula III and IV are known or may be made from known compounds by known methods.

(Compounds of formula IIIa and IVa in which R is R' or R" are described in detail in US patent 4,356,307 and USP 4,778,837).

(Compounds of formula IIII are described in USP 4,408,051 wherein R in the compounds of the said US Patent is $R_a$ of this application).

(Compounds of formula IIIj are described in US Patent 4,716,187, wherein R in the compound of the patent is $R_a$ of this application).

(Compounds of formula IIIk are describe in US Patent 4,730,017, wherein R of the compounds of this Patent is $R_a$ of the present application).

Preferred compound of formula IV are those of formula IVa to IVo

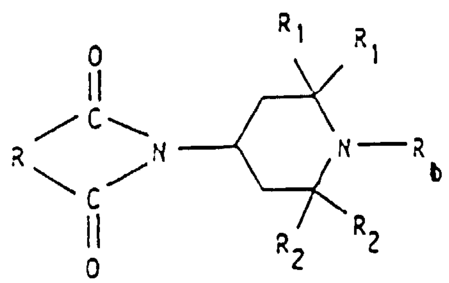

(IV a)

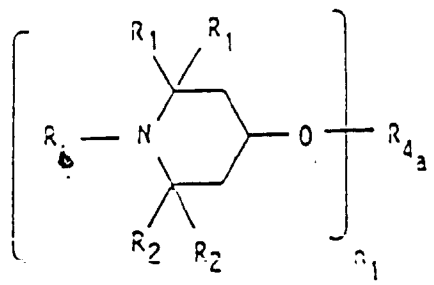

(IVb)

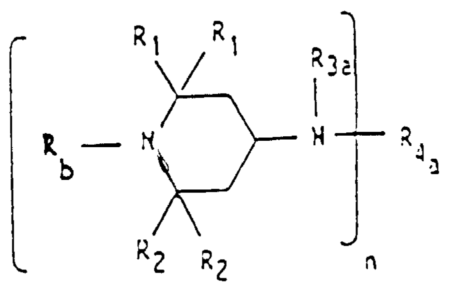

(IVc)

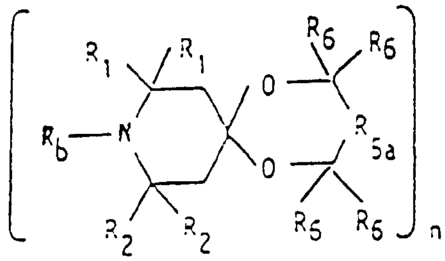

(IV_d)

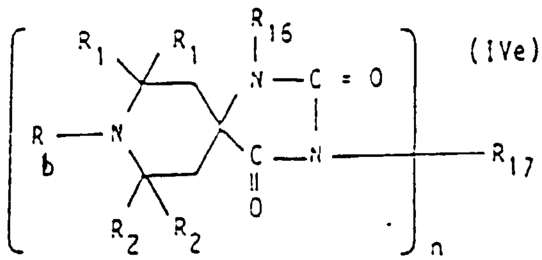

(IVe)

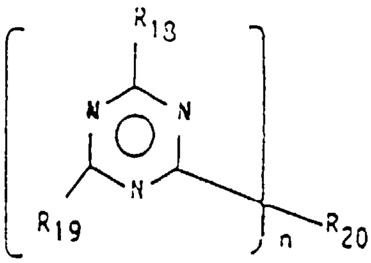

(IVf)

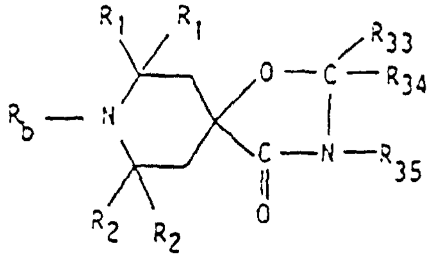

(IVg)

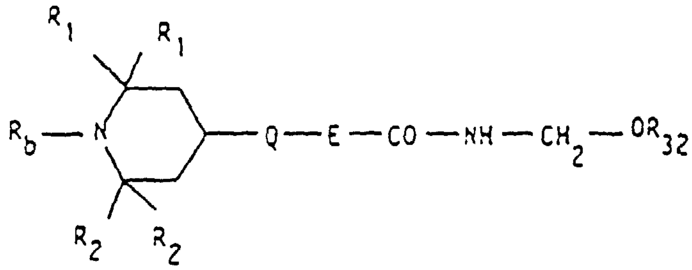

(I $V_h$)

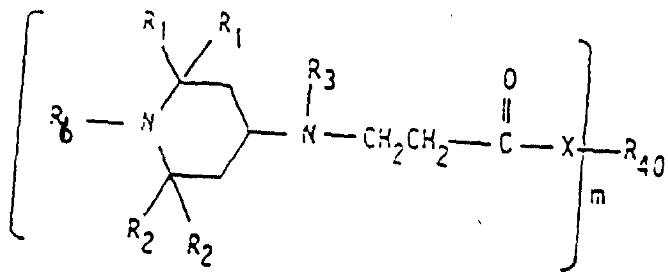

(IVi)

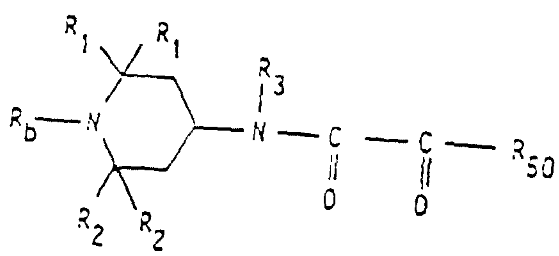

(IVj)

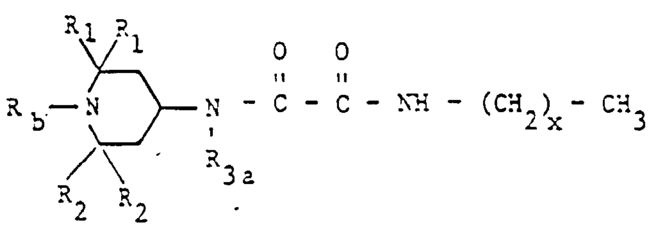

(IVk)

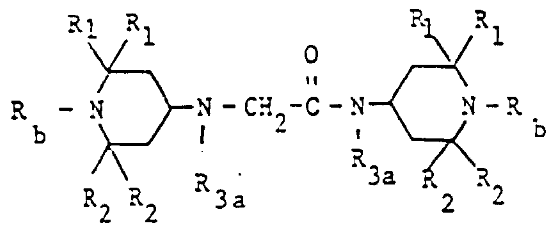

(IV l)

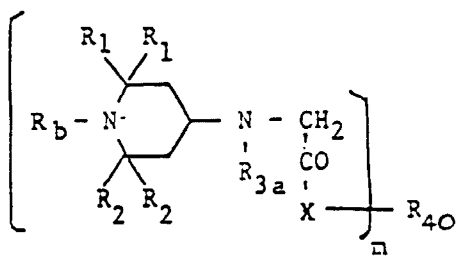

(IV m)

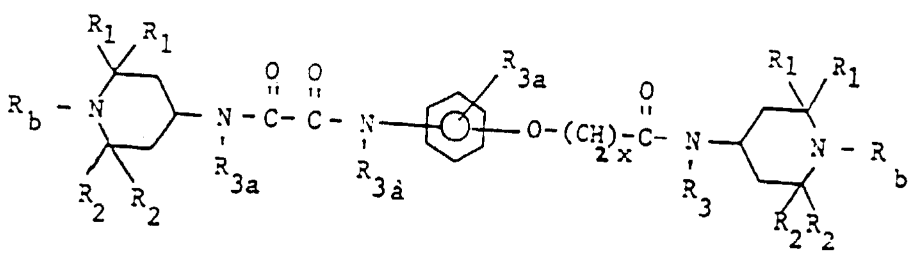

(IV n)

Most preferred compounds of formula III are those of formulae III'-III'''

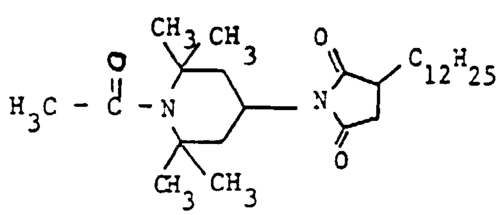

(III')

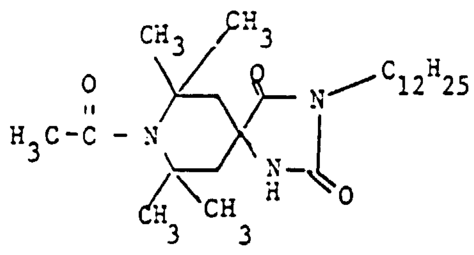

(III")

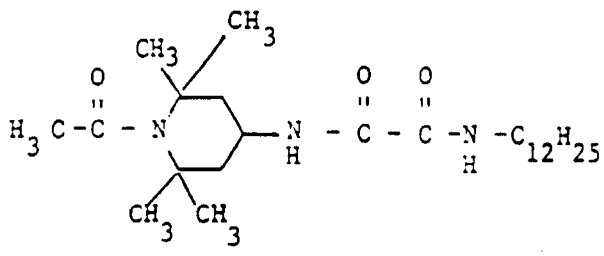

(III"')

The most preferred compound of formula IV is that of formula IV'

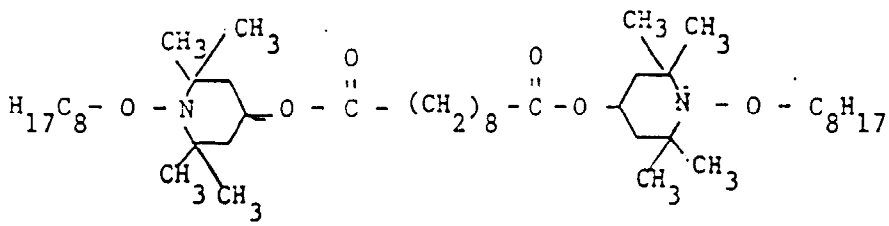

(IV')

Preferred compounds of formula V are cf formulae IIId, IIIe, and IIIh.
Most preferred compounds of formula V are of formula III".
Preferred compounds of formula VI are compounds of formula IIIa to IIIc, IIIf to IIIh and IIIj to IIIn defined above.
Most preferred compounds of formula VI are of formulae III' and III"' defined above.
Preferably R is R' where R' is $-CH(R_{10})-CH_2-$ or

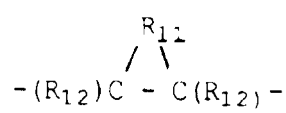

where $R_{10}$ is selected from $C_{12-18}$ alkyl or $C_{12-18}$ alkenyl; cyclo $C_{5-6}$alkylene, 1,2-cyclohexanediyl and a bicyclic divalent radical;
$R_{11}$ is an alicyclic or bicyclic ring system and each $R_{12}$ independently is $C_{1-4}$alkyl or hydrogen.
More preferably R is R" where R" is $-CH(R_{10}')-CH_2-$ where $R_{10}'$ is $C_{12-18}$alkyl.
Preferably $R_a$ is $R_a'$ where $R_a'$ is $-COR_5'$ where $R_5'$ is $-CH{=}CH_2$, $C_{1-8}$alkyl, $-CO-O-C_{1-8}$alkyl, $C_{2-8}$alkyenyl or phenyl.
Preferably $R_{5'}$ is $R_{5''}$ where $R_{5''}$ is $-CH{=}CH_2$, $C_{1-4}$ alkyl or $-CO-O-C_{1-4}$ alkyl.
Preferably $R_b$ is $R_b'$ where $R_b'$ is $-O-CO-R_5'$ where $R_5'$ is defined above.
Preferably each $R_1$ and each $R_2$ is $-CH_3$.
In this Specification any $C_{1-8}$ alkyl or $C_{1-6}$ alkyl group is preferably a $C_{1-4}$ alkyl group and any $C_{1-4}$ alkyl group

is preferably methyl or ethyl; preferably any alkoxy group is methoxy or ethoxy.

In this Specification, any group capable of being linear or branched is linear or branched.

Where a symbol appears more than once in a formula, its significances are independent of one another unless indicated to the contrary.

Further, according to the invention there is provided a polymeric composition comprising a polymeric material and a mixture of component a) and of component b) or a mixture of component i) and component ii).

Further according to the invention there is provided a method for stabilising a lacquer composition based on acrylic, alkyd and/or polyester resins (which if desired, can be crosslinked with melamine/formaldehyde resins, epoxide resins or polyisocyanates) which comprises incorporating into the resin a mixture of component a) and component b) or a mixture of component i) and component ii), optionally together with an acid catalyst or compound capable of releasing an acid catalyst.

Further, according to the invention there is provided a lacquer composition based on acrylic, alkyd and/or polyester resins (which if desired, can be crosslinked with melamine/formaldehyde resins, epoxide resins or polyisocyanates) containing a mixture of component a) and component b) or a mixture of component i) and component ii) optionally together with an acid catalyst or compound capable of releasing an acid catalyst.

The concentration of a mixture of component a) and component b) or a mixture of component i) and component ii) employed in the polymeric material is suitably 0.01 to 8 % by weight, preferably 0.02% to 1 % by weight and gives a clear improvement in the light- and weather-stability of organic pigments in stoving finishes as well as reducing the tendency to hairline cracking and loss of gloss as the result of weathering. This is also found for metallic finishes and excellent long-term stability of the clear top coat of two layer metallic finishes is obtained. In such finishes, the mixture of component a) and component b) or amixture of component i) and component ii) may be added to the metallic undercoat, the clear top coat or both, preferably only to the clear top coat. The metal surface to be finished may be under-coated with primer coatings as is customary in the art of coating metal surfaces.

The mixture of component a) and component b) or a mixture of component i) and component ii) may be added before, during or after the polymerization step, and may be added in solid form; in solution, preferably as a liquid concentrate containing from 20 to 80 % by weight of a mixture of component a) and component b) or a mixture of component i) and component ii) and 80-20% solvent; or as a solid masterbatch composition containing 10 to 80 % by weight of a mixture of component a) and component b) or a mixture of component i) and component ii) and 90 to 20 % by weight of a solid polymeric material which is identical with or compatible with the polymeric material to be stabilized.

Suitable polymeric materials include plastic materials for example polyethylene, polypropylene, ethylene/propylene copolymers, polyvinyl chloride, polyester, polyamide, polyurethane, polyacrylonitrile, ABS, terpolymers of acrylates, styrene and acrylonitrile, styrene/acrylonitrileand styrene/butadiene. Other plastics materials such as polybutylene, polystyrene, chlorinated polyethylene, polycarbonate, polymethylmethacrylate, polyphenylene oxide, polypropylene oxide; polyacetals, phenol/formaldehyde resins and epoxy resins may also be used. Preferred plastic materials are polypropylene, polyethylene, ethylene/propylene copolymers and ABS.

Natural polymers for example natural rubber may also be stabilized, as may lubricating oils containing polymeric material.

The mixture of a compound containing a group of formula I defined above and of a compound containing a group of formula II defined above may be incorporated by known methods into the polymeric material to be stabilized. Of particular importance is blending of the compounds with thermoplastic polymers in the melt, for example in a melt blender or during the formation of shaped articles, including foils, films, tubes, containers, bottles, fibres and foams by extrusion, injection moulding, blow moulding, spinning or wire coating.

it is not essential for the polymeric material to be fully polymerised before mixing with the compounds according to the invention. The compounds may be mixed with monomer, prepolymer or precondensate, and the polymerisation or condensation reaction is carried out subsequently. This will of course be the preferred method of incorporation of the compounds into thermosetting polymers, which cannot be melt blended.

Further antioxidants can be added to polymeric material either before, at the same time as or after (but before polymerisation occurs) the addition of a compound according to the invention.

Examples of antioxidants include benzofuran-2-ones,indolin-2-ones and sterically hindered phenols, sulphur and phosphorus containing compounds and mixtures thereof.

Preferred sterically hindered phenols include β-(4-hydroxy-3,5 -ditert.butylphenyl)-propionyl stearate, methane tetrakis-(methyiene -3 (3',5'-ditert.butyl-4-hydroxy-phenyl)-propionate), 1,3,3-tris-(2-methyl-4-hydroxy-5-tert.butyl phenyl)butane, 1,3,5-tris (4-tert.butyl -3-hydroxy-2,6-di-methylbenzyl)-1,3,5-triazinyl-2,4,6 (1H, 3H,5H) -trione, bis-(4-tert.butyl-3-hydroxy-2,6-di-methylbenzyl)dithiol terephthalate, tris (3,5-ditert.butyl-4-hydroxybenzyl) isocyanurate, the triester of beta-(4-hydroxy-3,5-ditert.butylphenyl) propionic acid with 1,3,4-tris-(2-hydroxyethyl)-5-triazinyl-2,4,6 (1H,3H,5H) -trione, bis (3,3-bis- (4'-hydroxy-3-tert.butylphenyl)-butyric acid) glycol ester, 1,3,5-trimethyl-2,4,6-tris-(3,5-ditert.butyl-4-hydroxy -benzyl) benzene, 2,2'-methylene-bis-(4-methyl-6-tert.butylphenyl) terephthalate, 4,4-methylene-bis-(2,6-ditert.-butylphenol), 4,4'-butylidine-bis-(tert.butylmetacresol), 2,2'-methylene-bis-(4-methyl-6-tert.-

butyl)-phenol, 1,3,5-tris-(3,5-di-t-butyl -4-hydroxyphenyl)-isocyanurate and 1,1,3,tris-(5-tert.butyl-4-hydroxy -2-methylphenyl)-butane.

Preferred sulphur containing antioxidative co-stabilizers which may be used include di-tridecyl-3,3-thiodipropionate, distearyl -3,3-thiodipropionate, di-lauryl-3,3-thiodipropionate, methane tetrakis (methylene-3-hexylthiopropionate), methane tetrakis (methylene-3-dodecylthiopropionate) and dioctadecyl disulphide.

Preferred phosphorus-containing co-stabilizers which may be used include trinonylphenyl phosphite, 4,9-distearyl-3,5,8,10-tetraoxadiphosphaspiroundecane, tris- (2,4-ditert.butylphenyl) phosphite, trilauryl phosphite, bis (2,6-di-t.butyl-4-methylphenyl)pentaerythrityl -diphosphite, bis (2,4-di-t.butylphenyl) pentaerythrityl-diphosphite, distearylpentaerythrityl diphosphite and tetrakis (2,4-ditert.butyl phenyl)-4,4'-biphenylene diphospnonite.

Further additives that can be added to polymeric compositions according to the invention include aminoaryl compounds, U.V. stabilisers and antistatic agents, flameproofing agents, softeners, nucleating agents, metal deactivators, biocides, impact modifiers, fillers, pigments and fungicides.

Preferred aminoaryl compounds include N,N'-dinaphthyl-p-phenyiene diamine and N,N'-hexamethylene-bis-3-(3,5- ditert.butyl-4-hydroxy phenyl)-propionamide.

Preferred U.V. stabilisers include U.V. absorbers (e.g. 2-(2'-hydroxyphenyl)-benztriazoles, 2-hydroxybenzophenones, 1, 3-bis-(2'-hydroxybenzoyl-)benzene salicylates, cinnamates and oxalic acid diamides; U.V. quenchers such as benzoates and substituted benzoates; and hindered amine light stabilisers (for example N-unsubstituted, N-alkyl or N-acyl substituted 2,2,6,6-tetra-alkyl piperidine compounds) other than those of the invention.

Preferably a compound of formula XX

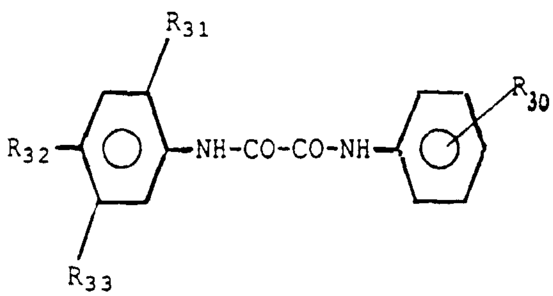

in which $R_{30}$ is $C_{6-22}$ alkyl or $C_{6-22}$ alkoxy;

$R_{31}$ and $R_{32}$ independently, are selected from hydrogen, $C_{1-8}$ alkyl, $C_{1-12}$ alkoxy, $C_{1-12}$ alkylthio, phenoxy and phenylthio provided that only one of $R_{31}$ and $R_{32}$ is alkylthio, phenoxy or phenylthio; and

$R_{33}$ is hydrogen or $C_{1-8}$ alkyl; is added to a compound of formula I.

The mixture of component a) and component b) or mixture of component i) and component ii) are especially suitable for use in organic polymer-containing coatings, particularly automotive finishes.

Automotives finishes are generally solutions or dispersion of organic polymers or polymer precursors in organic solvents. The majority are stoving finishes, which require the application of heat, generally above 80°C, on order to harden the finish in an acceptable time once it has been applied to the primer-coated metal surface. The hardening step may be accelerated by the use of an acid catalyst. The effect of this heating may be to accelerate the chemical reaction between polymer precursors in a thermosetting system, or to bring about fusion of particles of a thermoplastic polymer.

Many automotive finishes are metallic finishes, which contain flakes of metal, usually aluminium, in order to provide optical effects due to reflection. Such finishes are often two-coat finishes, in which a clear top coat finish is applied over a base coat finish containing a single pigment and/or metal flakes. The compounds of formula I can be in the top coat finish or the ground coat finish, preferably the former. Such two-coat metallic finishes have particular need to U.V.-stabilizers in the top coat, since the polymer in this coat is not protected by light-absorbing pigments, and it is subjected to almost double the normal amount of radiation because of reflection of light from the lower metallic layer.

The mixture of component a) and component b) or mixture of component i) and component ii) are suitable for use as U.V.-stabilizers in a wide range of liquid finishes, for example those based on combinations of melamine-formaldehyde resins with oil-modified polyester resins, polyacrylate resins with added crosslinkers, or saturated polyesters; or on self-crosslinked polyacrylate or polyacrylate resin co-polymerised with styrene.

Further examples are two-component finishes based on an aliphatic or aromatic di-isocyanate and a hydroxy-group-containing polyacrylate, polyester or polyether resin. These polyurethane 2-component finishes are preferably hardened at 60 to 120°C. Thermoplastic polyacrylate resins may also be used, the latter being particularly useful in metallic finishes, as are also polyacrylate resins with added crosslinkers in combination with melamine-formaldehyde resins etherified with butanol and, further, hydroxy-group-containing polyacrylate resins are described in USP 3,062,753.

The mixture of component a) and component b) or mixture of component i) and component ii) are particularly useful in acid catalysed stoving finishes particularly in the top coat of two metallic finishes.

The mixture of component a) and component b) or mixture of component i) and component ii) may be added to the finish at any stage in its manufacture, and may be added in solid form or in solution, preferably in the form of a liquid concentrate in a suitable solvent or in the form of a dispersion in water or organic solvent.

In practice the mixture of component a) and component b) or mixture of component i) and component ii) are added to a finish as a solution in organic solvent (as a liquid finish) in which the binder material is between 35 % (low solid finishes) and 70 % by weight (high solid finishes). The binder material of the finish can be in aqueous emulsion or suspension form (as an aqueous finish) in which the binder material part makes up 20 to 30 % by weight. However, the mixture of component a) and component b) or of component i) and of component ii) can be added to known powder finishes.

The mixture of component a) and component b) or mixture of component i) and component ii) are to be added to the liquid or powder finishes before stoving or hardening. Preferably the mixture of component a) and component b) or mixture of component i) and component ii) are used in liquid finishes since it is easy to add exact dosages. It is particularly preferred to use a concentrate (preferably in a hydrocarbon solvent) containing at least 40 % preferably 60 to 80 % by weight of the total weight of the concentrate of the mixture of component a) and component b) or mixture of component i) and component ii) to finishes for stoving.

The compounds of the invention can also be used in photopolymeric substrates containing photoinitiators for the photopolymerisation.

The invention will now be illustrated by the following Examples in which all parts and percentages are by weight and all temperatures are in °C. The amount of light stabilizer is based on the solids weight in the lacquers

**Example 1**

A 2 layer metallic coating comprising a base coat and a clear top coat can be prepared from the follow lacquers.

| Base coat lacquer | |
|---|---|
| 18.75% | of clear cloat lacquer 1 defined below (50% solids) |
| 51.75% | of a cellulose - acetobutyrate solution (20%) commerically available as Cellit BP 500 |
| 13.54% | of n-butyl acetate |
| 6.45% | of xylene |
| 5.15% | of ethylene glycol acetate |
| 0.26% | of anti-sedimenting medium: Aerosil 200 |
| 3.85% | of a 65% aluminium parte in ethylene glycol acetate commerically available as Alcoci 7530 |
| 0.25% | of Phthalocyanine Blue (C.I. Pigment Blue 15:1) |
| 100.00% | (the ratio of the pigment ot aluminium being about 1:10) |

Clear coat lacquer 1 is formulated as follows:

| | |
|---|---|
| 80.00% | of an acrylic resin, commercially available as Viacryl SC344 - a 50% in a solution of xylene and n-butanol (4:1 ratio) |
| 13.90% | of melamine resin |
| 4.10% | of n-butanol and |
| 2.00% | of a diluent commercially available as Byketol OK. |

Procedure of preparing the two coat lacquer coating:

A 10 x 30 cm primed aluminium piece is coated wet on wet with the base coat lacquer and then the clear coat lacquer, to which 1% of a 50:50 mix of the compound of formula 1a and 1b

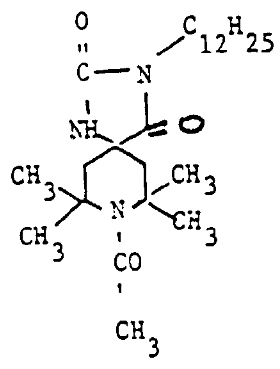

1a

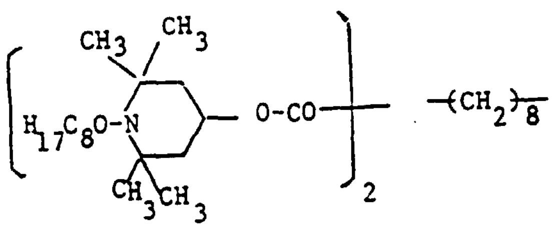

1b

has been applied to give a 15µ base coating and a 35 µ clear coating.

The so treated aluminium piece is then stoved at 140°C for 35 minutes.

**Example 2**

A two layer metallic coating comprising a base coat and a clear top coat can be prepared from the following lacquers.

a) Base coat lacquer:

| | |
|---|---|
| 18.75% | of the clear lacquer 1 defined below (50% solids); |
| 51.75% | of a cellulose-acetobutyrate solution (20%) commercially available as CELLIT BP 500; |
| 13.54% | of n-butyl acetate; |
| 6.45% | of xylene; |
| 5.15% | of ethylene glycol acetate; |
| 0.26% | of anti-sedimenting medium: Aerosil 200; |
| 3.85% | of a 65% aluminium paste in ethylene glycol acetate commerically available as ALCOCI 7530; and |
| 0.25% | of Phthalocyanine Blue (C.I. Pigment Blue 15:1) |
| 100.00% | the ratio of the pigment to aluminium being about 1:10. |

b) Clear coat lacquer 1 is formulated as below:

| | |
|---|---|
| 57.50% | of PARALOID AT 400 70% (Acrylic binder from Rohm and Haas); |
| 18.20% | of CYMEL 1130 (Melamine binder from Dyno Lyamann); |
| 1.50% | of BXK 306 (10% solution in Exxaffe 600 BYK Chemicals); |
| 21.60% | Exxate 600 (Solvent from Eno Chemicals); |
| 1.20% | CYCAT 4045 (Blocked acid catalyst from Dyno Cyanamid). |

A 10 x 30 cm primed aluminium piece is coated wet on wet with the base coat lacquer and then the clear coat lacquer to which 2% of a 50:50% mixture of compounds of formula 1a and 1b has been applied to give a 15μ base coating and a 35μ clear coating.

The so-treated aluminum piece is then stoved at 140°C for 35 minutes.

**Examples 3 and 4**

Examples 1 and 2 are repeated using, instead of the compound of formula 1a,

2% of a 50:50 mix of the compound of formula 1b defined in Example 1 and the compound of formula 3a (Example 3)

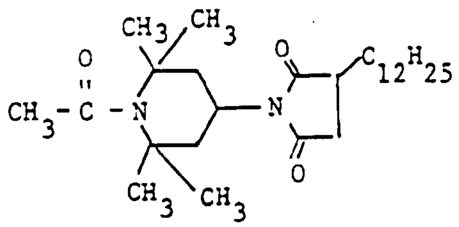

(3a)

or 2% of a 50:50 mix of the compound of formula 1b defined in Exampie 1 and the compound of formula 4a (Example 4)

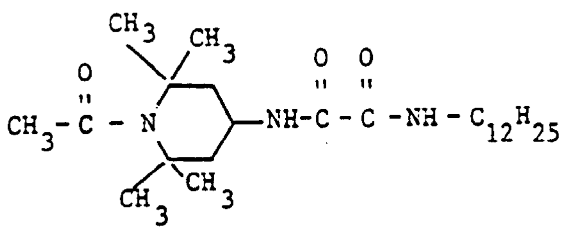

(4a)

**Example 5**

Examples 1 to 3 are repeated using additionally 1% of a U.V. absorber of the formula 5a

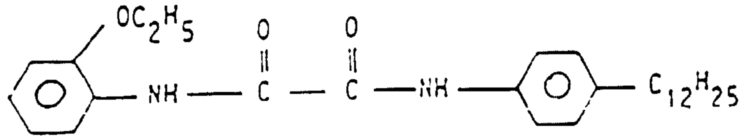

with the mixture of compounds of formula 1a and 1b, defined in Example 1.

**Example 6**

Examples 1 to 4 can be repeated in which 2.2% (actives) of the monobutylester of maleic anhydride are added to the clear lacquer; and instead of stoving at 140°C for 35 minutes the lacquer is acid cured at 90°C for 30 minutes.

**Example 7**

Examples 1 and 2 are repeated using instead of the mixture of compounds of 1a and 1b, 1% of a 50.50 mixture of compounds 1a and 3a (without any of the compound of formula 1b present).

**Examples 8 and 9**

Examples 1 and 2 are repeated using instead of the mixture of compounds of formula 1a and 1b, 1% of a 50:50 mixture of the compound of formula 1a and the compound of formula 3a; (Example 6) and 1% of a 50:50 mixture of the compound of formula 1a and the compound of formula 4a

**Example 10.**

A two layer coating in which the top coat is 2C-PUR can be prepared as follows:
A base coat lacquer is formulated as in Example 1.
A clear lacquer is prepared as follows:
The first component of the 2C-PUR comprises

| | |
|---|---|
| 44.1% | of a hydroxy-group-containing acrylic resin (OH number about 150) commercially available as Macrynal SM 510 N, a 60% solution in xylene and ethylene glycol acetate (ratio 4:1) |
| 35.2% | of a diluent mixture of methylethyl ketone and xylene (1:1) |
| 3.0% | of Byketol spezial: commercially available (silicone containing) levelling agent. |

The second component comprises

| | |
|---|---|
| 17.7% | of an aliphatic polyisocyanate commercially available as Desmodin N (which is a 75% solution in xylene / ethylene glycol acetate 4:1). |

The second component is then added to the first component and (defined above) mixed wet. To the 2C PUR so formed, 1% of a 50:50 mixture of a compound of formula la and 1b (defined in Example 1) is applied.
The base and clear lacquers (at the same thicknesses as in Example 1) are applied to an aluminium piece wet on wet as described in Example 1. The lacquers are then stoved at 80°C for 35 minutes.
Example 10 can be repeated using 1% of any one of the compounds of formula 1a or 1 b with compounds 3a or 4a (defined above).

**Claims**

**1.** A composition, suitable for stabilising a polymeric composition against the effects of light, comprising

a) an N-acylated 2,2,6,6-tetraalkylpiperidinyl group (hereinafter N- acylated HALS) containing compound; and

b) an N-oxy-substituted 2,2,6,6-tetraalkylpiperidinyl group (hereinafter N-oxy-substituted HALS) containing compound.

**2.** A composition comprising

a) 5-95% by weight of a compound containing a group of formula I

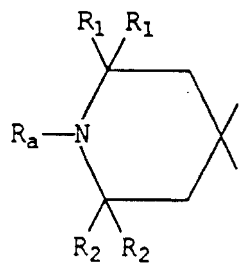

(I)

(hereinafter defined as component a)

b) 5-95% by weight of a compound containing a group of formula II

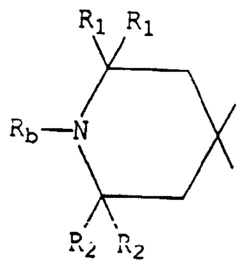

(II)

(hereinafter defined as component b)) in which

$R_a$ is -CO-$R_5$,

where $R_5$ is where $R_5$ is $C_{2-8}$alkenyl, $-C(R_3)=CH_2$ , $C_{1-22}$alkyl, phenyl, -CO-phenyl, $-NR_7R_8$, $-CH_2-C_6H_5$, $-CO-OC_{1-12}$alkyl or -COOH; $R_7$ is hydrogen, $C_{1-12}$alkyl, $C_{5-6}$cycloalkyl, phenyl, phenyl-$C_{1-4}$-alkyl or $C_{1-12}$alkylphenyl and $R_8$ is $C_{1-12}$alkyl or hydrogen, and

$R_b$ is oxygen; OH; -O-CO-$R_5$; -O-$C_{1-8}$alkyl; -O-CO-phenyl; -O-$C_{2-8}$alkenyl; -O-$C_{3-18}$alkynyl; -O-$C_{5-12}$cyclo alkyl; -O-$C_{6-10}$bicycloalkyl; -O-$C_{5-8}$cyclo alkenyl, -O-$C_{6-10}$aryl, -O-$R_{30}$ where $R_{30}$ is $C_{7-9}$alkaryl unsubstituted or monosubstituted by $C_{1-4}$alkyl or aryl; where $R_5$ is $C_{2-8}$alkenyl, $-C(R_3)=CH_2$ (preferably), $C_{1-22}$alkyl, phenyl, -CO-phenyl, $-NR_7R_8$, $-CH_2-C_6H_5$, $-CO-OC_{1-12}$alkyl or -COOH;

$R_3$ is hydrogen or $C_{1-4}$alkyl;

each $R_1$, independently, is $-CH_3$ or $-CH_2(C_{1-4}$alkyl) or both groups $R_1$ form a group $-(CH_2)_5-$; and

each $R_2$, independently, is $-CH_3$ or $-CH_2(C_{1-4}$alkyl) or both groups $R_2$ from a group $-(CH_2)_5-$;

the percentages being based on the amount of component a) and b) in the mixture.

**3.** A composition according to any one of the preceding claims in which

a) component a) is a compound of formula III

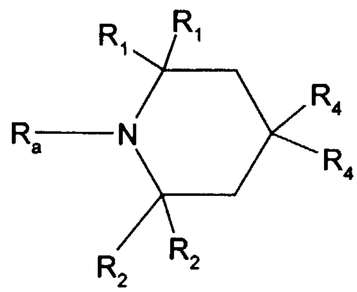

(III)

in which

$R_a$ is -CO-$R_5$; and

each $R_4$ independently is selected from hydrogen, a hydroxy group an ether group, an amine and amide forming group, an ester and ester forming group and a urea and urethane forming group; or both groups $R_4$ together with the C atom to which they are attached form a spiro group; and

b) component b is a compound of formula IV

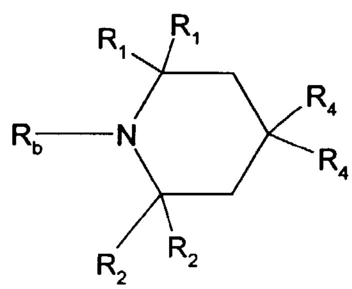

(IV)

in which

$R_b$ is oxygen; OH; -O-CO-$R_5$; -O-$C_{1-8}$alkyl; -O-CO-phenyl; -O-$C_{2-8}$alkenyl; -O-$C_{3-18}$alkynyl; -O-$C_{5-12}$cyclo alkyl; -O-$C_{6-10}$bicycloalkyl; -O-$C_{5-8}$cyclo alkenyl, -O-$C_{6-10}$aryl, -O-$R_{30}$ where $R_{30}$ is $C_{7-9}$alkaryl unsubstituted or monosubstituted by $C_{1-4}$alkyl or aryl; and

each $R_4$ independently is selected from hydrogen, a hydroxy group, an ether group, an amine and amide forming group, an ester and ester forming group and a urea and urethane forming group; or both groups $R_4$ together with the C atom to which they are attached form a spiro group; and the other symbols are as described in Claim 2.

**4.** A composition according to Claim 3 in which the compound of formula III is of formula IIIa to IIIn and the compound of formula IV is of formula IVa to IVn

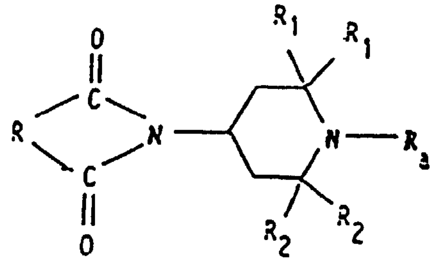

(IIIa)

in which R is a saturated or unsaturated optionally alkyl or alkenyl substituted alkylene or cycloalkylene radical having 2-20 carbon atoms; and the other symbols are as defined above;

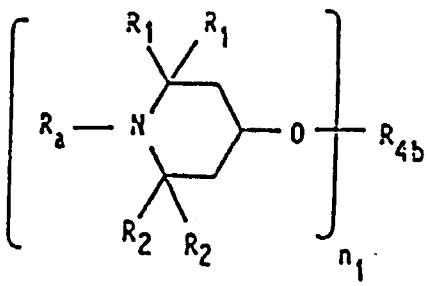 (IIIb)

where $n_1$ is a number from 1-4 inclusive, preferably 1 or 2;

$R_a$, $R_1$ and $R_2$ are as defined in Claim 2,

$R_{4b}$, when $n_1$=1, is hydrogen; $C_{1-18}$ alkyl, optionally interrupted by one or more oxygen atoms; cyanoethyl; benzyl, glycidyl; a monovalent radical of an aliphatic, cycloaliphatic, araliphatic or aromatic carboxylic acid or of a carbamic acid; or of a phosphorus-containing acid or a monovalent silyl radical, preferably a radical of an aliphatic carboxylic acid having 2-18 carbon atoms, of a cyloaliphatic carboxylic acid having 5-12 carbon atoms or of an aromatic carboxylic acid having 7-15 carbon atoms;

$R_{4b,}$ when $n_1$ is 2, is $C_{1-12}$alkylene, $C_{4-12}$alkenylene, xylylene, a bivalent radical of an aliphatic, cycloaliphatic, araliphatic or aromatic dicarboxylic acid or of a dicarbamic acid or of a phosphorus-containing acid, or a bivalent silyl radical, preferably a radical of an aliphatic dicarboxylic acid having 2-36 C atoms, of a cycloaliphatic or aromatic dicarboxylic acid having 8-14 C atoms, or of an aliphatic, cycloaliphatic or aromatic dicarbamic acid having 8-14 C atoms;

$R_{4b}$, when $n_1$ is 3, is a trivalent radical of an aliphatic, cycloaliphatic or aromatic tricarboxylic acid, of an aromatic tricarbamic acid or of a phosphorus-containing acid, or a trivalent silyl radical; and

$R_{4b}$, when $n_1$ is 4, is a tetravalent radical of an aliphatic, cycloaliphatic or aromatic tetracarboxylic acid;

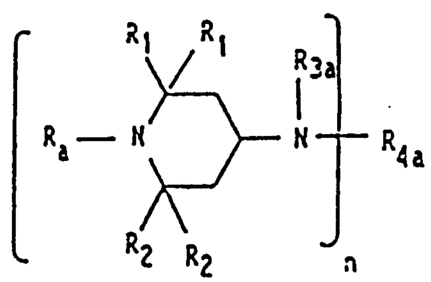 (IIIc)

where n is the number 1 or 2;

$R_a$, $R_1$ and $R_2$ are as defined above;

$R_{3a}$ is hydrogen, $C_{1-12}$alkyl, $C_{5-7}$cycloalkyl, $C_{7-8}$aralkyl, $C_{2-18}$alkanoyl, $C_{3-5}$alkenoyl, benzoyl or a group of the formula $-CH_2-CH(OH)-Z$ or of the formula -CONH-Z wherein Z is hydrogen, methyl or phenyl;

$R_{4a}$, when n is 1, is hydrogen, $C_{1-18}$alkyl, $C_{5-7}$cycloalkyl, $C_{2-8}$alkenyl unsubstituted or substituted by a cyano, carbonyl or carbamide group, or it is glycidyl, a group of the formula $-CH_2-CH(OH)-Z$ or of the formula -CONH-Z wherein Z is hydrogen, methyl or phenyl:

$R_{4a}$, when n is 2, is $C_{2-12}$alkylene, $C_{6-12}$arylene, xylylene, a $-CH_2-CH(OH)-CH_2-$ group or a $-CH_2-CH(OH)-CH_2-O-X-O-CH_2-CH(OH)-CH_2-$group wherein X is $C_{2-10}$alkylene, $C_{6-15}$arylene or C6-12 cycloalkylene; or, provided that $R_{3a}$ is not alkanoyl, alkenoyl cr benzoyl, $R_{4a}$ can also be a bivalent radical of an aliphatic, cycloaliphatic or aromatic dicarboxylic acid or of a dicarbamic acid, or can be the group -CO- or $R_{3a}$ and $R_{4a}$ together, when n is 1, can be the cyclic radical of an aliphatic or aromatic 1,2- or 1,3-dicarboxylic acid;

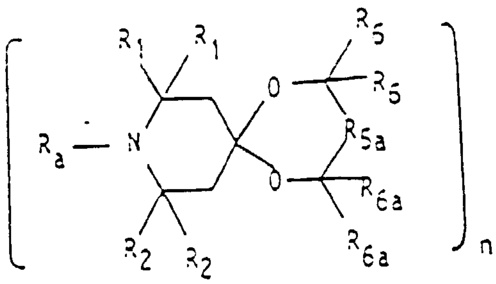

(IIId)

where n is the number 1 or 2;

$R_a$, $R_1$ and $R_2$ are as defined above;

$R_{5a,}$ when n is 1, is $C_{2-8}$alkylene or hydroxyalkylene or $C_{4-22}$ acyloxyalkylene;

$R_{5a}$, when n is 2, is the group $(-CH_2)_2C(CH_2-)_2$;

$R_6$ is hydrogen or both groups $R_6$ form a group = 0;

$R_{6a}$ is hydrogen or both groups $R_{6a}$ form a group = 0;

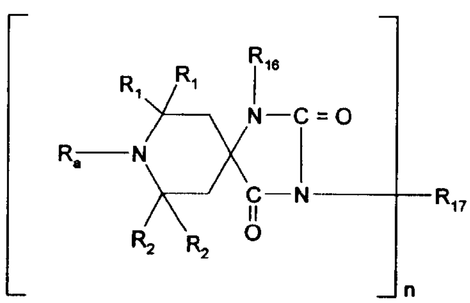

(III e)

where n is the number 1 or 2:

$R_a$, $R_1$ and $R_2$ are as defined above;

$R_{16}$ is hydrogen, $C_{1-12}$alkyl, allyl, benzyl, glycidyl or $C_{2-6}$alkoxyalkyl;

$R_{17}$, when n is 1, is hydrogen, $C_{1-12}$alkyl, $C_{3-5}$alkenyl, $C_{7-9}$aralkyl, $C_{5-7}$cycloalkyl, $C_{2-4}$hydroxyalkyl, $C_{2-6}$alkoxyalkyl, $C_{6-10}$aryl, glycidyl, a group of the formula $-(CH_2)_m-COO-Q$ or of the formula $-(CH_2)_m-O-C0-Q$ wherein m is 1 or 2, and Q is $C_{1-22}$alkyl, $C_{2-22}$alkenyl or phenyl; or a group of the formula $-CH_2-CH(CH_3)-COO-Q$ or of the formula $-CH_2-CH(CH_3)-O-C0-Q$ and Q is as defined above;

$R_{17}$, when n is 2 is $C_{2-12}$alkylene, $C_{6-12}$arylene, a group $-CH_2-CH(OH)-CH_2-0-X-CH_2-CH(OH)-CH_2-$ wherein X is $C_{2-10}$alkylene, $C_{6-15}$arylene or $C_{6-12}$cycloalkylene, or a group $-CH_2CH-(OZ')CH_2-(OCH_2-CH(OZ')-CH_2)_2-$ wherein Z' is hydrogen, $C_{1-18}$alkyl, allyl, benzyl, $C_{2-12}$alkanoyl or benzoyl; or a divalent radical of an aliphatic, cycloaliphatic, araliphatic or aromatic dicarboxylic acid;

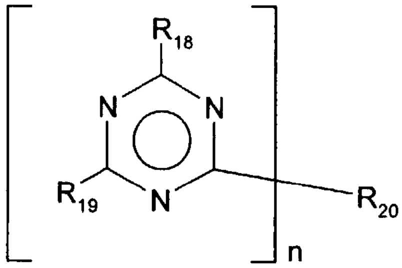

(III f)

where n is the number 1 or 2;

$R_{18}$ is a group of the formula

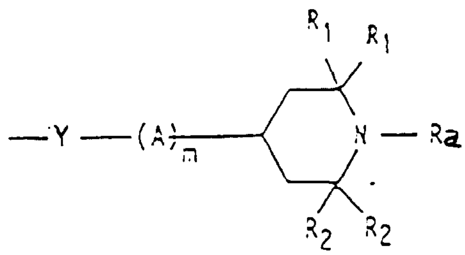

where $R_a$, $R_1$ and $R_2$ are as defined above;

Y is -O-; $-NR_{21}-$; or $-NR_{21}-CO-CO-NR_{21}-$;

A is $C_{2-6}$alkylene;

m is the number 0 or 1;

$R_{19}$ is selected from one of the groups $-R_{18}$,

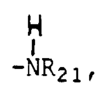

$-R_{22}$, $-OR_{23}$, $-NHCH_2OR_{23}$ and $-N(CH_2OR_{23})_2$;

$R_{20}$, when n is 1, is a group selected from $R_{18}$ and $R_{19}$;

$R_{20}$, when n is 2, is the group $-Y-Q_1-Y-$,

where $Q_1$ is $C_{2-6}$alkylene optionally interrupted by $-N(R_{24})-$;

$R_{21}$ is hydrogen, C1-12alkyl, cyclohexyl, benzyl or $C_{1-4}$hydroxyalkyl, or a group of the formula

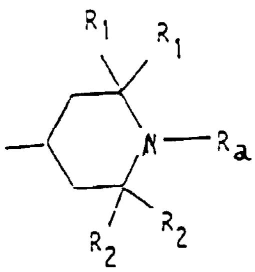

$R_{22}$ is $C_{1-12}$alkyl, cyclohexyl, benzyl or $C_{1-4}$hydroxyalkyl;

$R_{23}$ is hydrogen, $C_{1-12}$alkyl or phenyl;

$R_{24}$ is hydrogen or the group $-CH_2OR_{23}$;

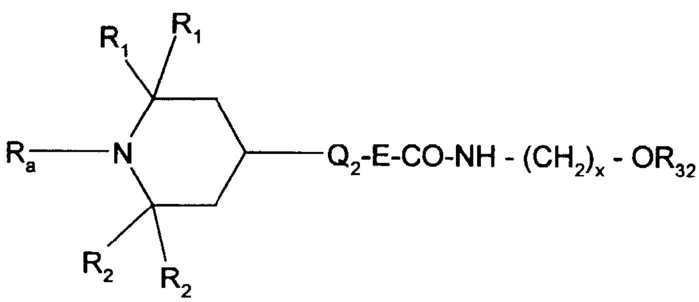

(III g)

where x is an integer from 1 to 6 inclusive;

$R_a$, $R_1$ and $R_2$ are as defined above;

$Q_2$ is $-N(R_{31})-$ or $-O-$;

E is $C_{1-3}$alkylene, the group $-CH_2-CH(R_{34})-O-$ where $R_{34}$ is hydrogen, methyl or phenyl, the group $-(CH_2)_3-NH-$ or a single bond or -CO-;

$R_a$, is as defined above;

$R_{32}$ is hydrogen or $C_{1-18}$alkyl;

$R_{31}$ is hydrogen, $C_{1-18}$alkyl, $C_{5-7}$cycloalkyl, $C_{7-12}$aralkyl, cyanoethyl, $C_{6-10}$aryl, the group $-CH_2-CH(R_{4a})-OH$ where $R_{4a}$ has the meaning defined above (when n=1), a group of the formula

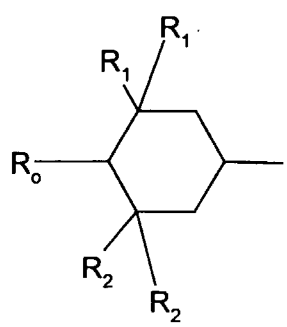

where $R_o$ has a significance of $R_a$;

or a group of the formula

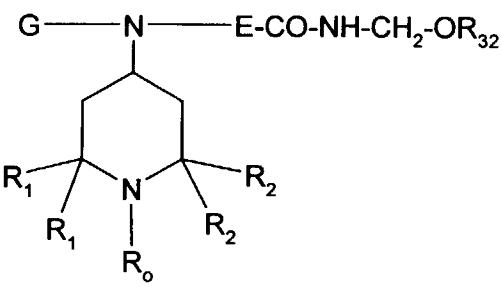

where G can be $C_{2-6}$alkylene or $C_{6-12}$arylene and E, $R_a$, $R_1$, $R_2$, $R_0$ and $R_{32}$ are as defined above;

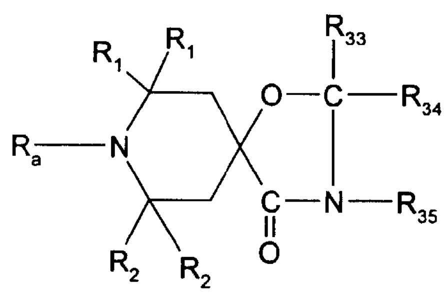

(III h)

where $R_a$, $R_1$ and $R_2$ are as defined above;

$R_{33}$ and $R_{34}$ independently are hydrogen, $C_{1-30}$alkyl or benzyl or $R_{33}$ is hydrogen or $C_{1-4}$alkyl and $R_{34}$ is phenyl, ($C_{1-4}$alkyl) phenyl, chlorophenyl, 4-hydroxy-3,5-t-butylphenyl or naphthyl; or $R_{33}$ and $R_{34}$ together with the carbon atoms to which they are attached form

a $C_{5-15}$cycloalkylidene ring which may be unsubstituted or substituted by one $C_{1-4}$alkyl group or form a group of formula

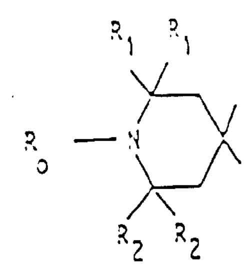

$R_{35}$ is hydrogen, $C_{1-20}$alkyl, $C_{2-20}$alkenyl or -CH($R_{36}$)-CH($R_{37}$)-COO$R_{38}$ where $R_{36}$ is hydrogen, methyl, phenyl or -COO$C_{1-21}$alkyl;

$R_o$ is as defined above;

$R_{37}$ is hydrogen or methyl and $R_{38}$ is hydrogen, a $C_{1-21}$alkyl or $C_{2-22}$alkenyl group which may be unsubstituted or monosubstituted by phenyl or naphthyl and which may be interrupted by oxygen or by a $C_{1-4}$alkylimine group; phenyl; (C1-12alkyl) phenyl;

$C_{5-12}$cycloalkyl or a saturated aliphatic hydrocarbon residue having 2-20 carbon atoms which may be interrupted by oxygen or by a $C_{1-4}$alkylimine group and which is substituted by 1 to 3 groups selected from ($C_{1-21}$alkyl)COO- and groups of the formula

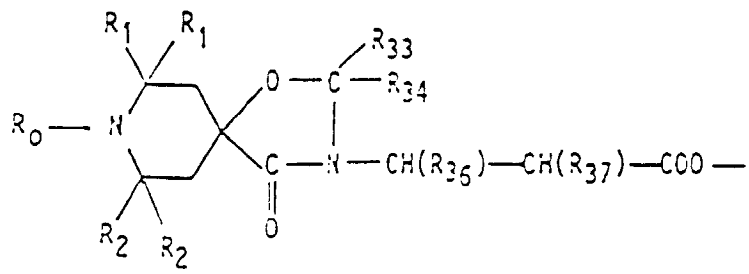

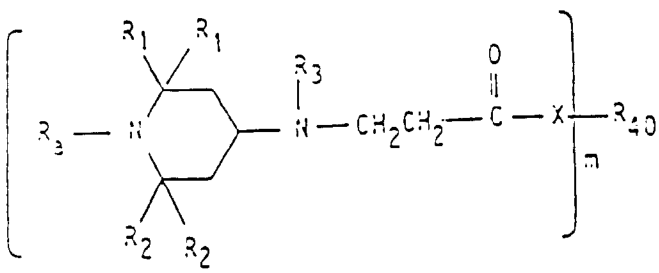

(IIIi)

in which $R_a$, $R_1$, $R_2$ and $R_3$ are as defined above;

X is -O-, -NH- or -N($C_{1-4}$alkyl)- and

$R_{40}$ is a saturated or unsaturated aliphatic group unsubstituted or substituted by one or two groups selected from-OH and $C_{1-4}$alkoxy and which can be interrupted by an oxygen or sulphur atom; or an aromatic group, unsubstituted or substituted by one or two groups selected from -OH, $C_{1-4}$alkyl and $C_{1-4}$alkoxy;

m is an integer of from 1 to 4 inclusive;

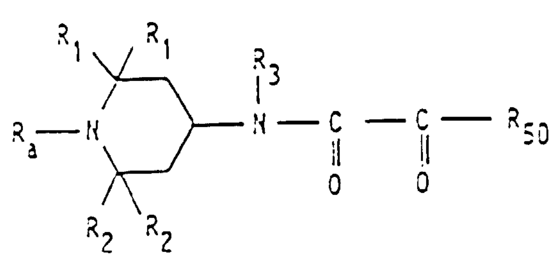

(IIIj)

where $R_a$, $R_1$, $R_2$ and $R_3$ are as defined above and $R_{50}$ is an amide or ester forming group;

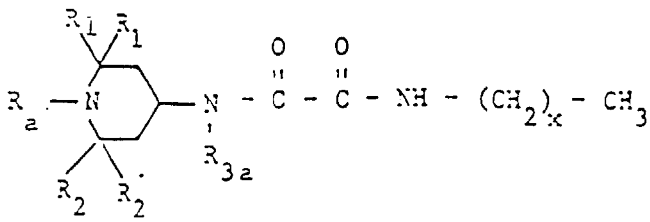

(IIIk)

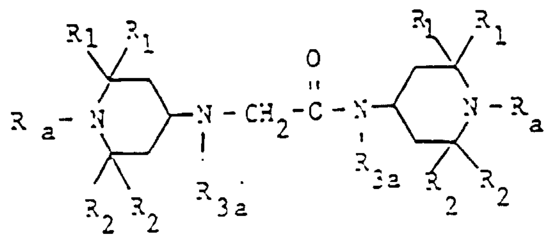

(IIIl)

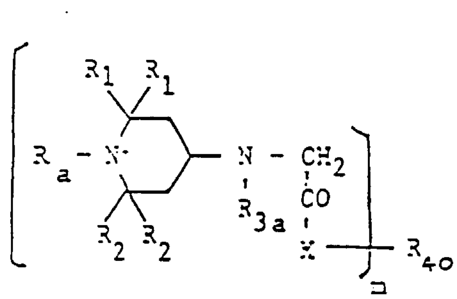

(IIIm)

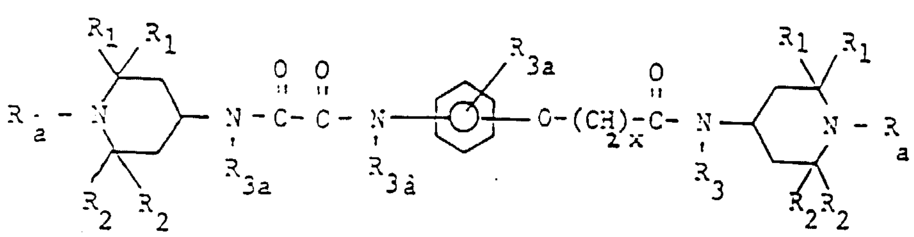

(IIIn)

where the symbols are as defined above;

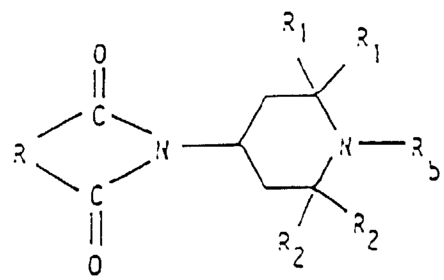

(IVa)

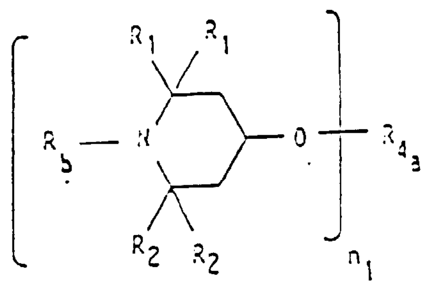

(IVb)

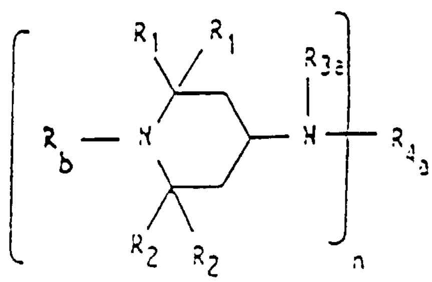

(IVc)

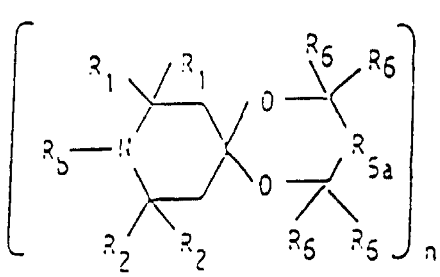

(IVd)

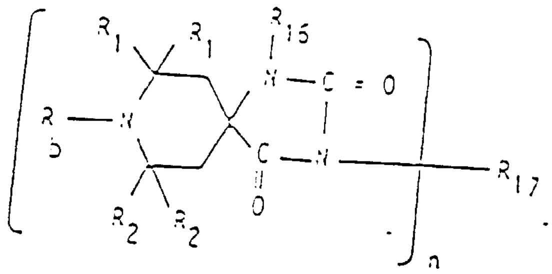

(IVe)

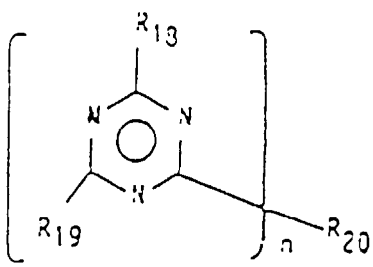

(IVf)

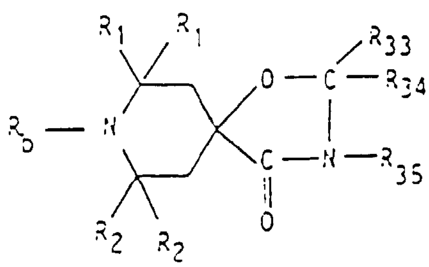

(IVg)

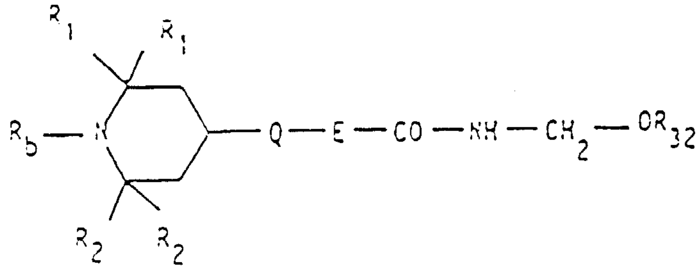

(IVh)

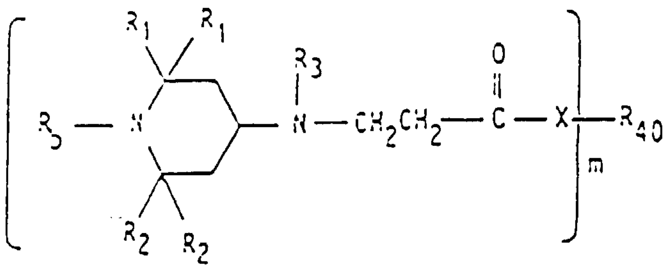

(IVi)

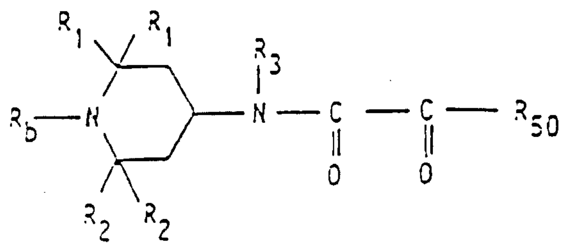

(IVj)

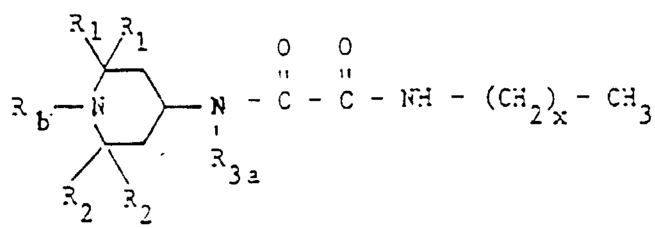

(IVk)

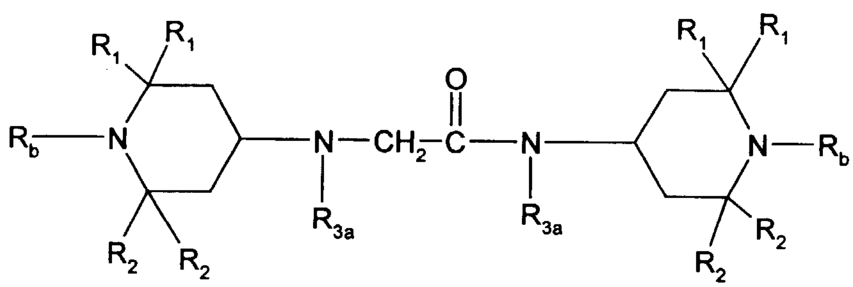

(IV l)

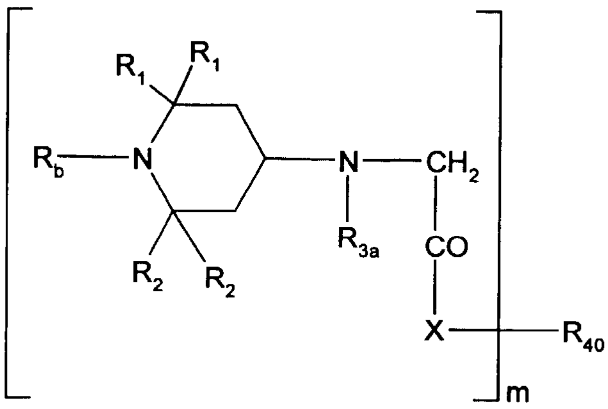

(IV m)

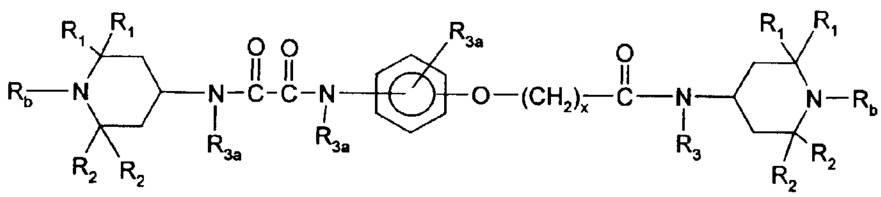

(IV n)

where the symbols are as defined above or are defined in Claim 2.

5. A composition according to Claim 3 or 4 in which the compound of formula III is of formula III' to III'"

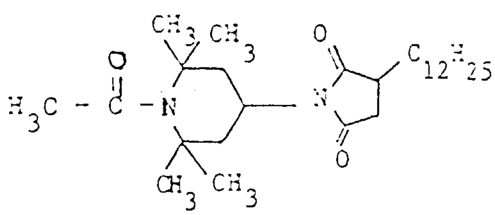

(III')

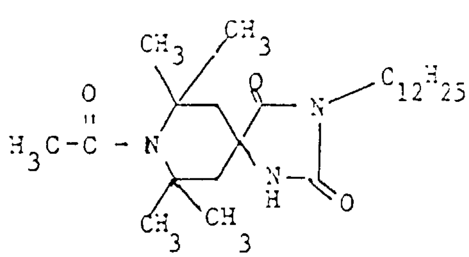

(III")

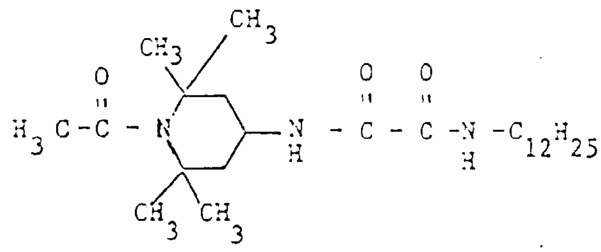

(III''')

and the compound of formula IV is of formula IV'

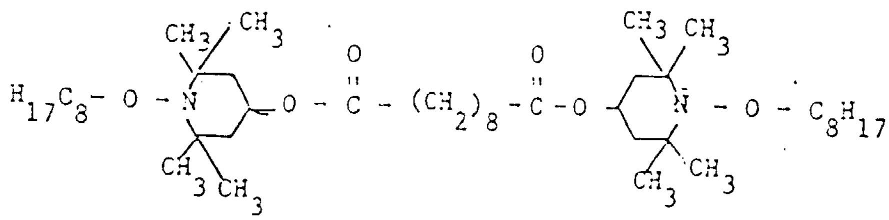

**6.** A composition, suitable for stabilising a polymeric composition against the effects of light, comprising

a) an N-acylated 2,2,6,6-tetraalkylpiperidinyl-group-containing compound in which a spiro group is attached in the 4-position (hereinafter defined as component i); and

b) an N-acylated 2,2,6,6-tetraalkylpiperidinyl-group-containing compound in which in the 4- position no spiro group is present (hereinafter defined as component ii).

**7.** A composition according to Claim 6 in which

i) component i) is a compound of formula V

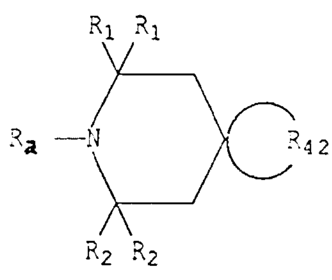

$R_a$ is -CO-$R_5$;

$R_{42}$ together with the C atom to which it is attached form a spiro group; and

ii) component ii) is a compound of formula VI

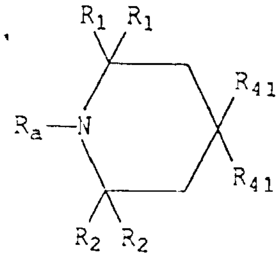

(VI)

where each $R_{41}$ independently is selected from hydrogen, an amine and amide forming group, an ester and ester forming group and a urea and urethane forming group; and the other symbols are as defined in Claim 2.

**8.** A polymeric composition comprising a polymeric material and a mixture of component a) and of component b) defined in Claims 1 to 5 or of component i) and of component ii) defined in Claims 6 or 7.

**9.** A method for stabilising a lacquer composition based on based on acrylic, alkyd and/or polyester resins (which if desired, can be crosslinked with melamine/formaldehyde resins, epoxide resins or polyisocyanates) which comprises incorporating into the resin a a mixture of component a) and of,component b) defined in Claims 1 to 5 or of component i) and of component ii) defined in Claims 6 or 7, optionally together with an acid catayst or compound capable of releasing an acid catalyst.

**10.** A lacquer composition based on acrylic, alkyd and/or polyester resins (which if desired, can be crosslinked with melamine/formaldehyde resins, epoxide resins or polyisocyanates) containing a mixture of component a). and of component b) defined in Claims 1 to 5 or of component i) and of component ii) defined in Claims 6 or 7, optionally together with an acid catayst or compound capable of releasing an acid catalyst.

**11.** A mixture comprising

a) 10-90% by weight of a compound containing a group of formula I

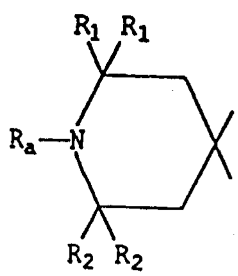

(I)

(hereinafter described as component a)

b) 10-90% by weight of a compound containing a group of formula II

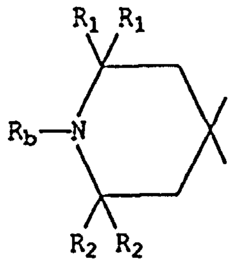

(II)

(hereinafter described as component b))

in which $R_a$ is -CO-$R_5$, where $R_5$ is defined below

$R_b$ is oxygen; OH; -O-CO-$R_5$; -O-$C_{1-8}$alkyl; -O-CO-phenyl; -O-$C_{2-8}$alkenyl or -$COR_5$; -O-$C_{3-18}$alkynyl; -O-$C_{5-12}$cyclo alkyl; -O-$C_{6-10}$bicycloalkyl; -O-$C_{5-8}$cyclo alkenyl, -O-$C_{6-10}$aryl, -O-$R_{30}$ where $R_{30}$ is $C_{7-9}$alkaryl unsubstituted or monosubstituted by $C_{1-4}$alkyl or aryl; where $R_5$ is $C_{2-8}$alkenyl, -C($R_3$)=$CH_2$ (preferably), $C_{1-22}$alkyl, phenyl, -CO-phenyl, -$NR_7R_8$, -$CH_2$-$C_6H_5$, -CO-$OC_{1-12}$alkyl or -COOH; $R_7$ is hydrogen, $C_{1-12}$alkyl, $C_{5-6}$cycloalkyl, phenyl, phenyl-$C_{1-4}$ alkyl or $C_{1-12}$alkylphenyl and $R_8$ is $C_{1-12}$alkyl or hydrogen, and

$R_3$ is hydrogen or $C_{1-4}$alkyl;

each $R_1$, independently, is -$CH_3$ or -$CH_2$($C_{1-4}$alkyl) or both groups $R_1$ form a group -$(CH_2)_5$-; and

each $R_2$, independently, is -$CH_3$ or -$CH_2$($C_{1-4}$alkyl) or both groups $R_2$ form a group -$(CH_2)_5$-.

**12.** The use of a mixture according to Claim 11 to stabilize an acid catalysed polymeric lacquer against the effects of light whilst at the same time providing good hardening properties.

**Patentansprüche**

**1.** Eine für die Stabilisierung einer polymeren Zusammensetzung gegen die Wirkungen von Licht geeignete Zusammensetzung, enthaltend

a) eine Verbindung mit einer N-acylierten 2,2,6,6-Tetraalkylpiperidinyl-Gruppe (nachfolgend N-acylierte HALS); und

b) eine Verbindung mit einer N-Oxy-substituierten 2,2,6,6-Tetraalkylpiperidinyl-Gruppe (nachfolgend N-Oxy substituierte HALS).

**2.** Eine Zusammensetzung, enthaltend

a) 5-95 Gew.% einer Verbindung, welche eine Gruppe der Formel I

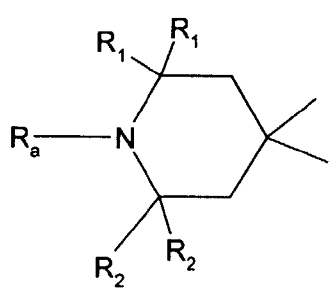

(I)

(nachfolgend definiert als Komponente a) enthält,

b) 5-95 Gew.% einer Verbindung, welche eine Gruppe der Formel II

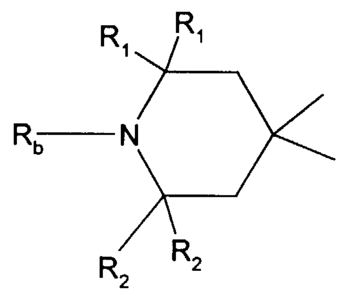

(II)

(nachfolgend definiert als Komponente b) enthält,
worin

$R_a$ für -CO-$R_5$ steht, wobei $R_5$ $C_{2-8}$ Alkenyl, -C($R_3$)=$CH_2$, $C_{1-22}$Alkyl, Phenyl, -CO-Phenyl, -$NR_7R_8$, -$CH_2$-$C_6H_5$, -CO-$OC_{1-12}$Alkyl oder -COOH bedeutet; $R_7$ für Wasserstoff, $C_{1-12}$Al kyl, $C_{5-6}$Cycloalkyl, Phenyl, Phenyl-$C_{1-4}$Alkyl oder $C_{1-12}$Alkylphenyl steht und $R_8$ $C_{1-12}$Alkyl oder Wasserstoff bedeutet, und

$R_b$ Sauerstoff; OH; -O-CO-$R_5$; -O-$C_{1-8}$Alkyl; -O-CO-Phenyl; -O-$C_{2-8}$Alkenyl; -O-$C_{3-18}$Alkynyl; -O-$C_{5-12}$Cycloalkyl; -O-$C_{6-10}$Bicycloalkyl; -O-$C_{5-8}$Cycloalkenyl, -O-$C_{6-10}$Aryl, -O-$R_{30}$ ist, worin $R_{30}$ ein unsubstituiertes oder durch $C_{1-4}$Alkyl oder Aryl monosubstituiertes $C_{7-9}$Alkaryl bedeutet; wobei $R_5$ für $C_{2-8}$Alkenyl, -C($R_3$)=$CH_2$ (vorzugsweise), $C_{1-22}$Alkyl, Phenyl, -CO-Phenyl, -$NR_7R_8$, -$CH_2$-$C_6H_5$, -CO-$OC_{1-12}$Alkyl oder -COOH steht;

$R_3$ Wasserstoff oder $C_{1-4}$Alkyl bedeutet;

jedes $R_1$ unabhängig für -$CH_3$ oder -$CH_2$ ($C_{1-4}$Alkyl) steht oder beide Gruppen $R_1$ zusammen eine -$(CH_2)_5$ - Gruppe bilden; und

jedes $R_2$ unabhängig für -$CH_3$ oder -$CH_2$ ($C_{1-4}$Alkyl) steht oder beide Gruppen $R_2$ zusammen eine -$(OH_2)_5$ - Gruppe bilden;

die Prozentangaben beziehen sich auf den Anteil der Komponenten a) und b) in der Mischung.

**3.** Eine Zusammensetzung gemäss einem der vorhergehenden Patentansprüche, worin

a) die Komponente a) eine Verbindung der Formel III

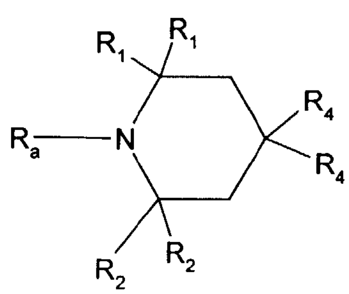

(III)

ist, worin $R_a$ für -CO-$R_5$ steht;
und jedes $R_4$ unabhängig ausgewählt ist aus Wasserstoff, einer Hydroxylgruppe, einer Ethergruppe, einer

Amino und Amid bildenden Gruppe, einer Ester und Ester bildenden Gruppe und einer Harnstoff und Urethan bildenden Gruppe; oder beide Gruppen $R_4$ zusammen mit dem C-Atom, an das sie gebunden sind, eine Spiro-Gruppe bilden; und

b) die Komponente b eine Verbindung der Formel IV

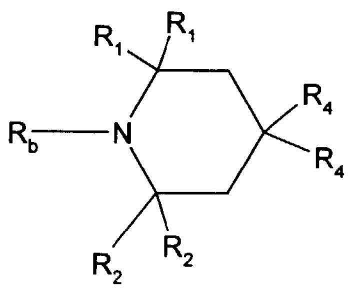

(IV)

ist, worin $R_b$ für Sauerstoff; -OH; -O-CO-$R_5$; -O-$C_{1-8}$Alkyl; -O-CO-Phenyl; -O-$C_{2-8}$Alkenyl; -O-$C_{3-18}$Alkynyl; -O-$C_{5-12}$Cycloalkyl; -O-$C_{6-10}$Bicycloalkyl; -O-$C_{5-8}$Cycloalkenyl; -O-$C_{6-10}$Aryl, -O-$R_{30}$ steht, worin $R_{30}$ ein unsubstituiertes oder durch $C_{1-4}$Alkyl oder Aryl monosubstituiertes $C_{7-9}$Alkaryl bedeutet; und
jedes $R_4$ unabhängig ausgewählt ist aus Wasserstoff, einer Hydroxylgruppe, einer Ethergruppe, einer Amino und Amid bildenden Gruppe, einer Ester und Ester bildenden Gruppe und einer Harnstoff und Urethan bildenden Gruppe; oder beide Gruppen $R_4$ zusammen mit dem C-Atom, an das sie gebunden sind, eine Spiro Gruppe-bilden; und die anderen Symbole die im Patentanspruch 2 angegebene Bedeutung besitzen.

**4.** Eine Zusammensetzung gemäss Patentanspruch 3, worin die Verbindung der Formel III einer der Formeln IIIa bis IIIn entspricht und die Verbindung der Formel IV einer der Formeln IVa bis IVn entspricht

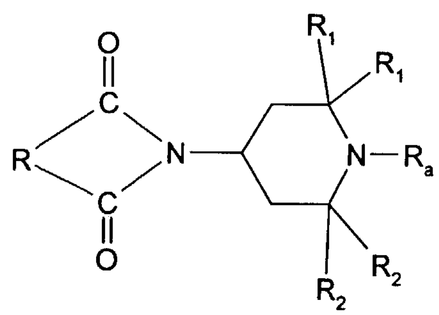

(III a)

worin R ein gesättigter oder ungesättigter, gegebenenfalls durch Alkyl oder Alkenyl substituierter Alkylen- oder Cycloalkylen-Rest mit 2 bis 20 Kohlenstoffatomen ist; und die anderen Symbole wie oben beschrieben definiert sind;

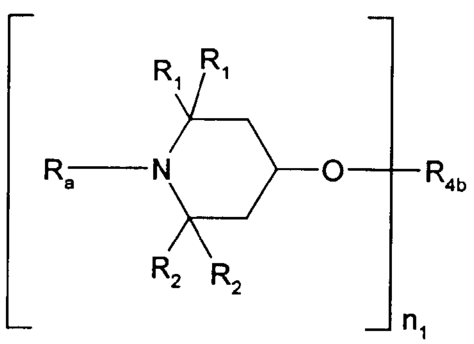

(III b)

worin $n_1$ eine Zahl von 1 bis inkl. 4 ist, vorzugsweise 1 oder 2;

$R_a$, $R_1$ und $R_2$ die im Patentanspruch 2 angegebene Bedeutung besitzen,

$R_{4b}$, falls $n_1$ = 1, Wasserstoff; $C_{1-18}$Alkyl, welches gegebenenfalls unterbrochen ist durch ein oder mehrere Sauerstoffatome; Cyanoethyl; Benzyl, Glycidyl; einen einwertigen Rest einer aliphatischen, cycloaliphatischen, araliphatischen oder aromatischen Carbonsäure oder einer Carbaminsäure; oder einer Phosphor enthaltenden Säure oder einen einwertigen Silyl-Rest, vorzugsweise einen Rest einer aliphatischen Carbonsäure mit 2-18 Kohlenstoffatomen; einer cycloaliphatischen Carbonsäure mit 5-12 Kohlenstoffatomen oder einer aromatischen Carbonsäure mit 7-15 Kohlenstoffatomen bedeutet;

$R_{4b}$, falls $n_1$ = 2, $C_{1-12}$Alkylen, $C_{4-12}$Alkenylen, Xylylen, einen zweiwertigen Rest einer aliphatischen, cycloaliphatischen, araliphatischen oder aromatischen Dicarbonsäure oder einer Dicarbaminsäure oder einer Phosphor enthaltenden Säure, oder einen zweiwertigen Silyl-Rest, vorzugsweise einen Rest einer aliphatischen Dicarbonsäure mit 2-36 C-Atomen, einer cycloaliphatischen oder aromatischen Dicarbonsäure mit 8-14 C-Atomen, oder einer aliphatischen, cycloaliphatischen oder aromatischen Dicarbaminsäure mit 8-14 C-Atomen bedeutet;

$R_{4b}$, falls $n_1$ = 3, einen dreiwertigen Rest einer aliphatischen, cycloaliphatischen oder aromatischen Tricarbonsäure, oder einer aromatischen Tricarbaminsäure oder einer Phosphor enthaltenden Säure, oder einen dreiwertigen Silyl-Rest bedeutet; und

$R_{4b}$, falls $n_1$ = 4, einen vierwertigen Rest einer aliphatischen, cycloaliphatischen oder aromatischen Tetracarbonsäure bedeutet,

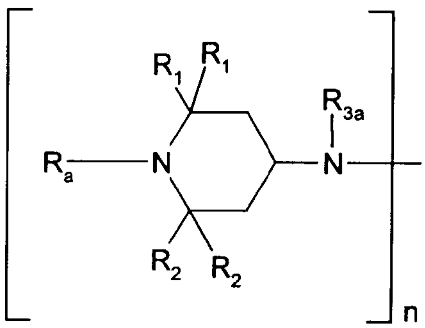

(III c)

worin n die Zahl 1 oder 2 bedeutet;

$R_a$, $R_1$ und $R_2$ die oben angegebene Bedeutung besitzen;

$R_{3a}$ für Wasserstoff, $C_{1-12}$Alkyl, $C_{5-7}$Cycloalkyl, $C_{7-8}$Aralkyl, $C_{2-18}$Alkanoyl, $C_{3-5}$ Alkenoyl, Benzoyl oder eine Gruppe der Formel $-CH_2-CH(OH)-Z$ oder der Formel -CONH-Z steht, worin Z Wasserstoff, Methyl oder Phenyl bedeutet,

$R_{4a}$, falls $n_1$ = 1, Wasserstoff; $C_{1-18}$Alkyl, $C_{5-7}$Cycloalkyl, ein unsubstituiertes oder durch eine Cyano-, Carbonyl- oder Carbamid-Gruppe substituiertes $C_{2-8}$ Alkenyl bedeutet, oder es ist Glycidyl, eine Gruppe der Formel $-CH_2-CH(OH)-Z$ oder der Formel -CONH-Z, worin Z für Wasserstoff, Methyl oder Phenyl steht;

$R_{4a}$, falls $n_1$ = 2, $C_{2-12}$Alkylen, $C_{6-12}$Arylen, Xylylen, eine $-CH_2-CH(OH)-CH_2$-Gruppe oder eine $-CH_2-CH(OH)-CH_2-O-X-O-CH_2-CH(OH)-CH_2$-Gruppe, worin X für $C_{2-10}$Alkylen, $C_{6-15}$Arylen oder $C_{6-12}$Cycloalkylen steht, bedeutet;

oder vorausgesetzt, dass $R_{3a}$ nicht für Alkanoyl, Alkenoyl oder Benzoyl steht, kann $R_{4a}$ ebenfalls einen zweiwertigen Rest einer aliphatischen, cycloaliphatischen oder aromatischen Dicarbonsäure oder einer Dicarbaminsäure bedeuten oder es kann für die Gruppe -CO- stehen oder $R_{3a}$ und $R_{4a}$ können zusammen, falls n für 1 steht, den cyclische Rest einer aliphatischen oder aromatischen 1,2-oder 1,3-Dicarbonsäure bedeuten;

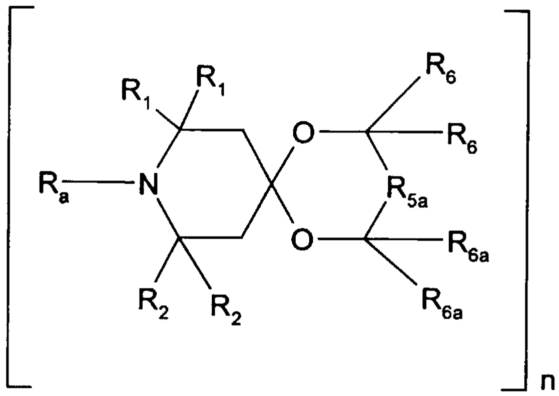

(III d)

worin n für die Zahl 1 oder 2 steht;

$R_a$, $R_1$ und $R_2$ die oben angegebene Bedeutung besitzen;

$R_{5a}$, falls n für 1 steht, $C_{2-8}$Alkylen oder Hydroxyalkylen oder $C_{4-22}$Acyloxyalkylen bedeutet;

$R_{5a}$, falls n für 2 steht, die Gruppe $(-CH_2)_2C(CH_2-)_2$ bedeutet;

$R_6$ für Wasserstoff steht oder beide Gruppen $R_6$ eine Gruppe = 0 bilden ;

$R_{6a}$ für Wasserstoff steht oder beide Gruppen $R_{6a}$ eine Gruppe = 0 bilden ;

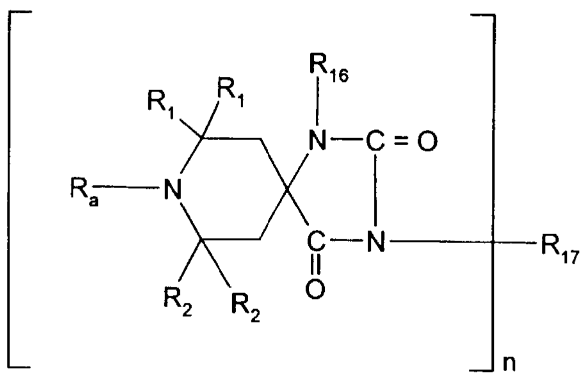

(III e)

worin n die Zahl 1 oder 2 bedeutet;

$R_a$, $R_1$ und $R_2$ die oben angegebene Bedeutung besitzen;

$R_{16}$ Wasserstoff, $C_{1-12}$Alkyl, Allyl, Benzyl, Glycidyl oder $C_{2-6}$Alkoxyalkyl bedeutet;

$R_{17}$, falls n für steht, Wasserstoff, $C_{1-12}$Alkyl, $C_{3-5}$Alkenyl, $C_{7-9}$Aralkyl, $C_{5-7}$Cyclo- alkyl, $C_{2-4}$Hydroxyalkyl, $C_{2-6}$Alkoxyalkyl, $C_{6-10}$Aryl, Glycidyl, eine Gruppe der Formel $-(CH_2)_m$-COO-Q oder der Formel $-(CH_2)_m$-O-CO-Q bedeutet, worin m für 1 oder 2 und Q für $C_{1-22}$Alkyl, $C_{2-22}$Alkenyl oder Phenyl stehen, oder für eine Gruppe der Formel $-CH_2-CH(CH_3)$-COO-Q oder der Formel $-CH_2-CH(CH_3)$-O-CO-Q steht und Q die oben angegebene Bedeutung besitzt;

$R_{17}$, falls n für 2 steht, $C_{2-12}$Alkylen, $C_{6-12}$Arylen, eine Gruppe $-CH_2-CH(OH)-CH_2-O-X-CH_2-CH(OH)-CH_2-$, worin X für $C_{2-10}$Alkylen, $C_{6-15}$Arylen oder $C_{6-12}$Cycloalkylen steht, oder eine Gruppe $-CH_2CH-(OZ')CH_2-(OCH_2-CH(OZ')-CH_2)_2-$ bedeutet, worin Z' für Wasserstoff, $C_{1-18}$ Alkyl, Allyl, Benzyl, $C_{2-12}$Alkanoyl oder Benzoyl steht; oder für einen zweiwertigen Rest einer aliphatischen, cycloaliphatischen, araliphatischen oder aro-

matischen Dicarbonsäure steht;

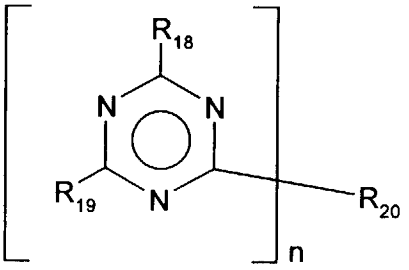

(III f)

worin n die Zahl 1 oder 2 bedeutet;

$R_{18}$ eine Gruppe der Formel

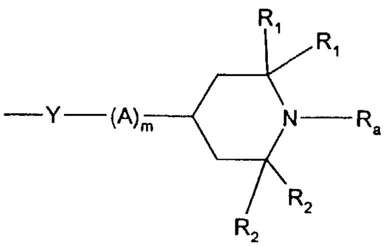

bedeutet, worin $R_a$, $R_1$ und $R_2$ die oben angegebene Bedeutung besitzen;

Y für -O-;-$NR_{21}$-; oder -$NR_{21}$-CO-CO-$NR_{21}$- steht ;

A $C_{2-6}$Alkylen ist;

m die Zahl 0 oder 1 ist;

$R_{19}$ aus einer der Gruppen -$R_{18}$, -$NHR_{21}$, -$R_{22}$, -$OR_{23}$, -$NHCH_2OR_{23}$ und -$N(CH_2OR_{23})_2$ ausgewählt ist;

$R_{20}$, falls n für 1 steht, eine aus $R_{18}$ und $R_{19}$ ausgewählte Gruppe bedeutet;

$R_{20}$, falls n für 2 steht, die Gruppe -Y-$Q_1$-Y- bedeutet, worin $Q_1$ für $C_{2-6}$Alkylen steht, welches gegebenenfalls durch -$N(R_{24})$- unterbrochen ist;

$R_{21}$ Wasserstoff, $C_{1-12}$Alkyl, Cyclohexyl, Benzyl oder $C_{1-4}$Hydroxyalkyl, oder eine Gruppe der Formel

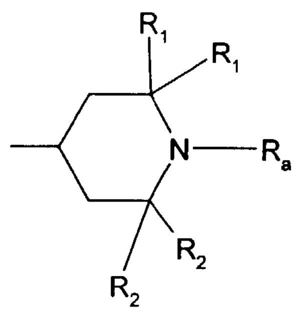

bedeutet,

$R_{22}$ für $C_{1-12}$Alkyl, Cyclohexyl, Benzyl oder $C_{1-4}$Hydroxyalkyl steht;

$R_{23}$ Wasserstoff, $C_{1-12}$Alkyl oder Phenyl ist;

$R_{24}$ Wasserstoff oder die Gruppe $-CH_2OR_{23}$ bedeutet;

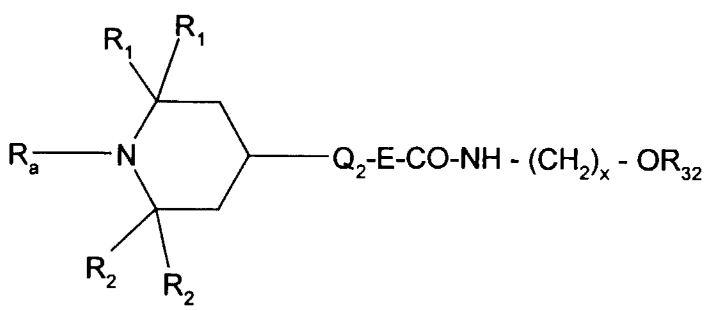

(III g)

worin x eine ganze Zahl von 1 bis inkl. 6 bedeutet;

$R_a$, $R_1$ und $R_2$ die oben angegebene Bedeutung besitzen;

$Q_2$ für $-N(R_{31})-$ oder -O- steht;

E $C_{1-3}$ Alkylen, die Gruppe $-CH_2-CH(R_{34})-O-$, worin $R_{34}$ für Wasserstoff, Methyl oder Phenyl steht, die Gruppe $-(CH_2)_3-NH-$ oder eine Einfachbindung oder -CO- bedeutet;

$R_a$ die oben angegebene Bedeutung besitzt;

$R_{32}$ Wasserstoff oder $C_{1-18}$Alkyl ist;

$R_{31}$ Wasserstoff, $C_{1-8}$Alkyl, $C_{5-7}$Cycloalkyl, $C_{7-12}$Aralkyl, Cyanoethyl, $C_{6-10}$ Aryl, die Gruppe $-CH_2-CH(R_{4a})-OH$, worin $R_{4a}$ (falls n = 1) die oben angegebene Bedeutung besitzt, eine Gruppe der Formel

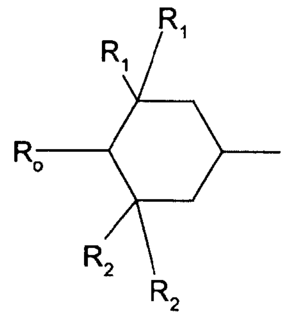

worin $R_0$ die Bedeutung von $R_a$ besitzt, oder eine Gruppe der Formel

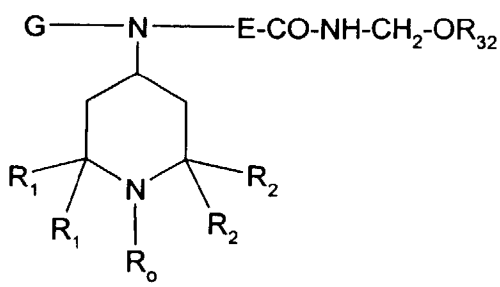

bedeutet, worin G für $C_{2-6}$Alkylen oder $C_{6-12}$Arylen steht und E, $R_a$, $R_1$, $R_2$, $R_0$ und $R_{32}$ die oben angegebene Bedeutung besitzen;

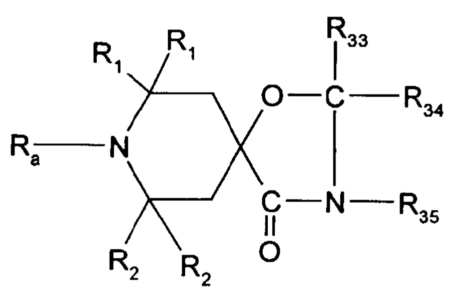

(III h)

worin $R_a$, $R_1$ und $R_2$ die oben angegebene Bedeutung besitzen;

$R_{33}$ und $R_{34}$ unabhängig voneinander für Wasserstoff, $C_{1-30}$Alkyl oder Benzyl stehen oder $R_{33}$ Wasserstoff oder $C_{1-4}$Alkyl und $R_{34}$ Phenyl, ($C_{1-4}$Alkyl)Phenyl, Chlorphenyl, 4-Hydroxy-3,5-t-butylphenyl oder Naphthyl bedeuten, oder $R_{33}$ und $R_{34}$ zusammen mit den Kohlenstoffatomen, an die sie gebunden sind, einen $C_{5-15}$ Cycloalkylidenring bilden, welcher unsubstituiert oder durch eine $C_{1-4}$Alkylgruppe substituiert sein kann, oder ein Gruppe der Formel

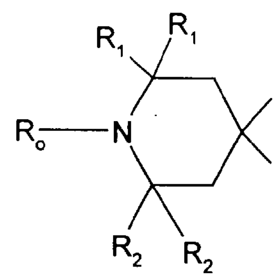

bilden;

$R_{35}$ Wasserstoff, $C_{1-20}$Alkyl, $C_{2-20}$Alkenyl oder -CH($R_{36}$)-CH($R_{37}$)-COOR$_{38}$ bedeutet, worin $R_{36}$ Wasserstoff, Methyl, Phenyl oder -COOC$_{1-21}$Alkyl ist;

$R_0$ die oben angegebene Bedeutung besitzt;

$R_{37}$ Wasserstoff oder Methyl bedeutet und $R_{38}$ für Wasserstoff, eine $C_{1-21}$Alkyl- oder $C_{2-22}$Alkenyl-Gruppe, welche unsubstituiert oder durch Phenyl oder Naphthyl monosubstituiert und durch Sauerstoff oder eine $C_{1-4}$Alkylimin-Gruppe unterbrochen sein kann; Phenyl; ($C_{1-12}$Alkyl)Phenyl; $C_{5-12}$Cycloalkyl oder einen gesättigten aliphatischen Kohlenwasserstoff-Rest mit 2-20 Kohlenstoffatomen steht, welcher durch Sauerstoff oder eine $C_{1-4}$Alkylimin-Gruppe unterbrochen sein kann und welcher durch 1 bis 3 Gruppen substituiert ist, ausgewählt aus ($C_{1-21}$Alkyl)COO- und Gruppen der Formel

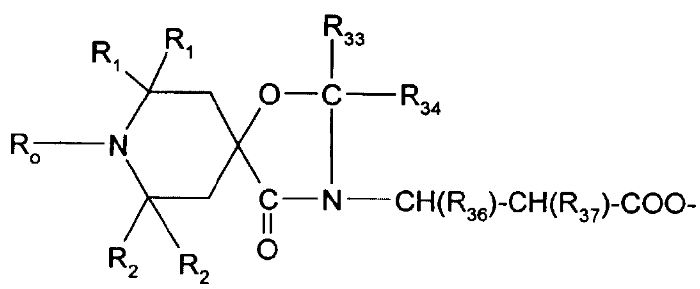

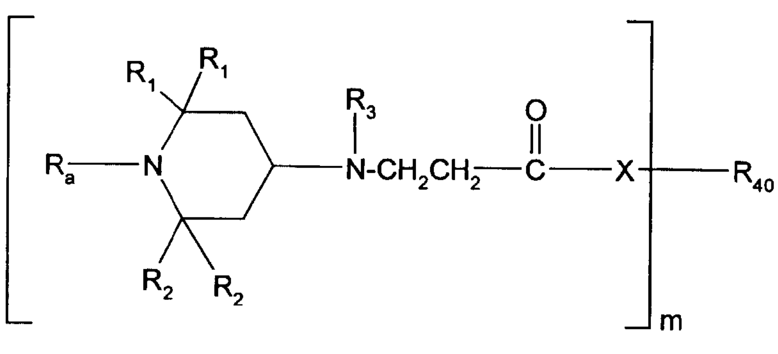

(III i)

worin $R_a$, $R_1$, $R_2$ und $R_3$ die obige Bedeutung besitzen;

X -O-, -NH- oder -N($C_{1-4}$Alkyl)- bedeutet und

$R_{40}$ für eine gesättigte oder ungesättigte aliphatische Gruppe, welche unsubstituiert oder durch eine oder zwei Gruppen -OH oder $C_{1-4}$Alkoxy substituiert ist und welche durch ein Sauerstoff- oder ein Schwefelatom unterbrochen sein kann; oder eine aromatische Gruppe, welche unsubstituiert oder durch eine oder zwei Gruppen -OH, $C_{1-4}$Alkyl oder $C_{1-4}$Alkoxy substituiert ist, steht;

m eine ganze Zahl von 1 bis inkl. 4 ist;

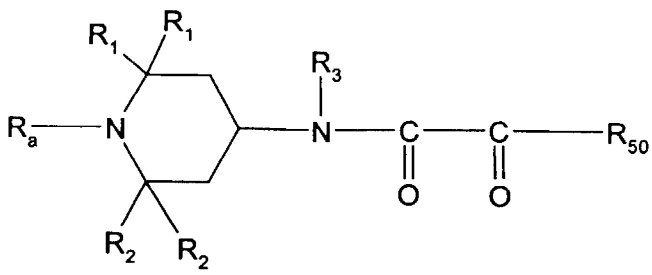

(III j)

worin $R_a$, $R_1$, $R_2$ und $R_3$ die obige Bedeutung besitzen und $R_{50}$ für eine Amid oder Ester bildende Gruppe steht;

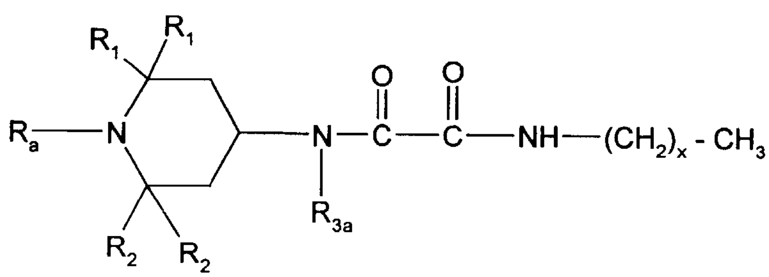

(III k)

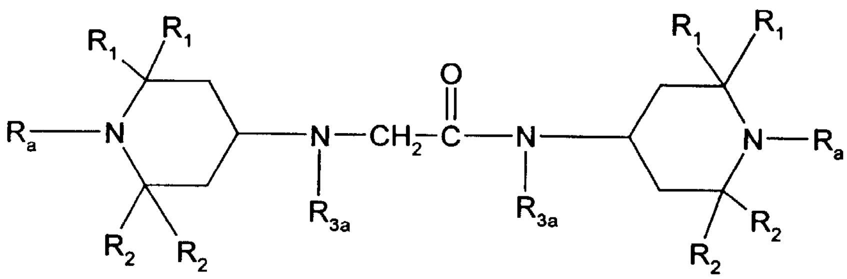

(III l)

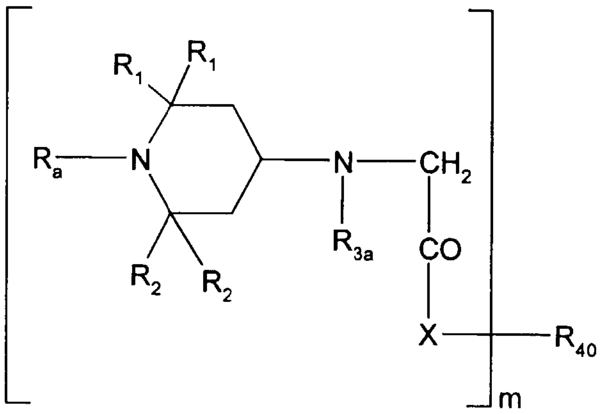

(III m)

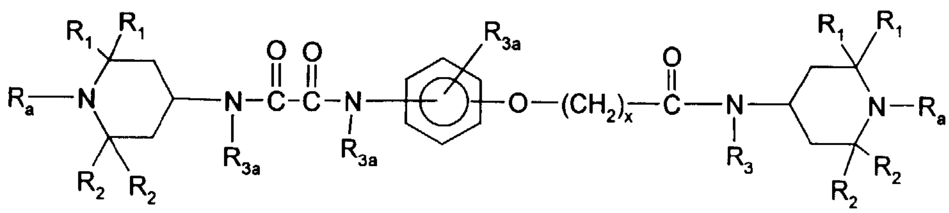

(III n)

worin die Symbole die oben angegebene Bedeutung besitzen;

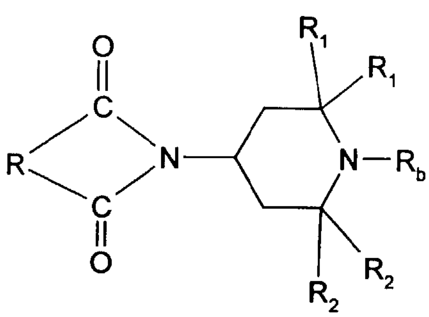

(IV a)

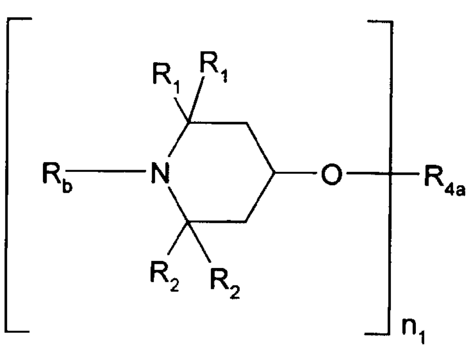

(IV b)

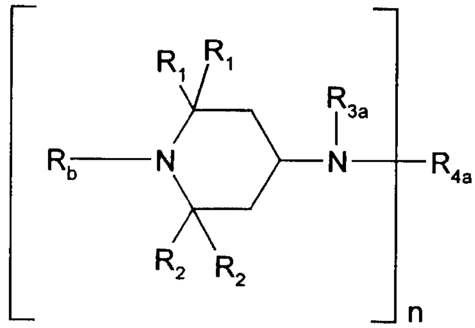

(IV c)

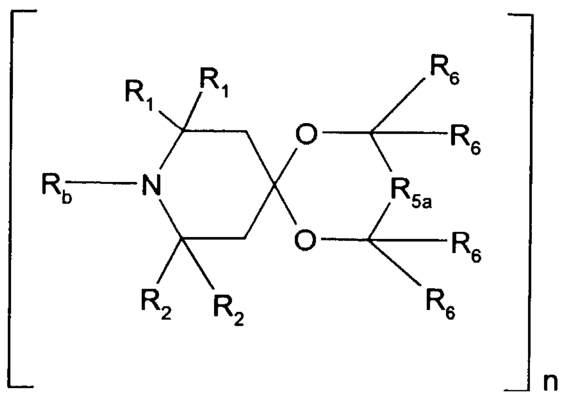

(IV d)

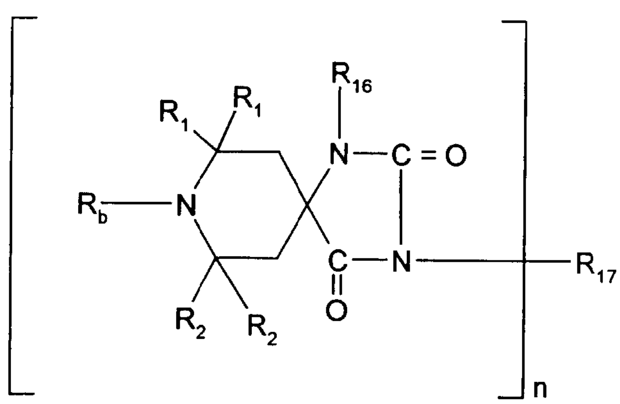

(IV e)

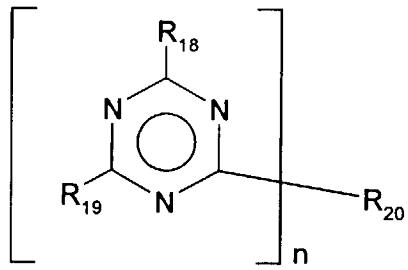

(IV f)

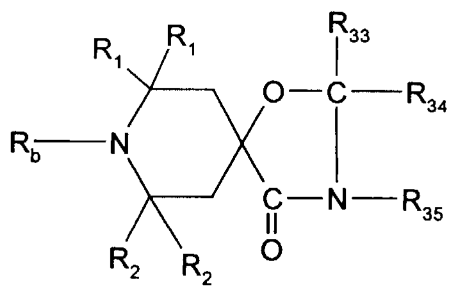

(IV g)

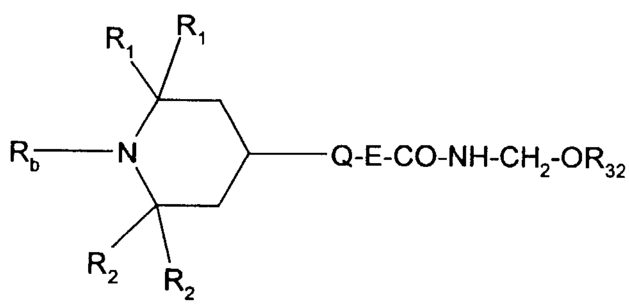

(IV h)

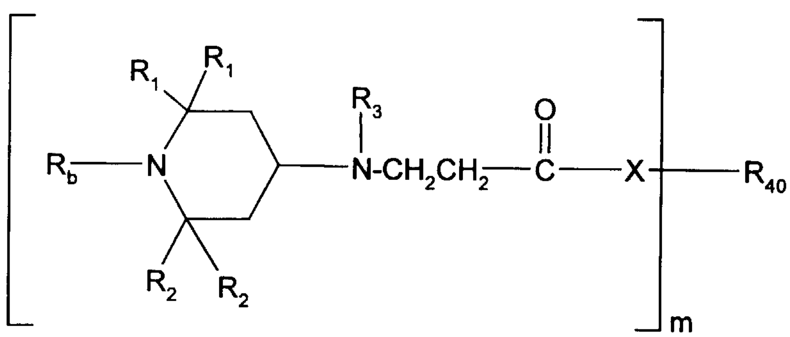

(IV i)

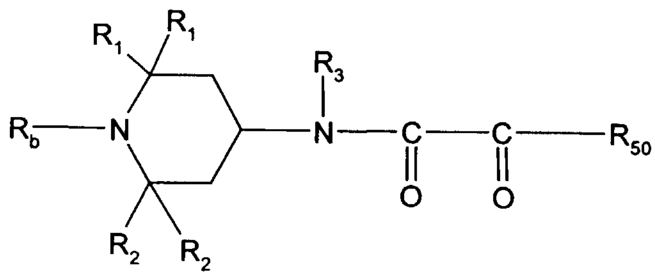

(IV j)

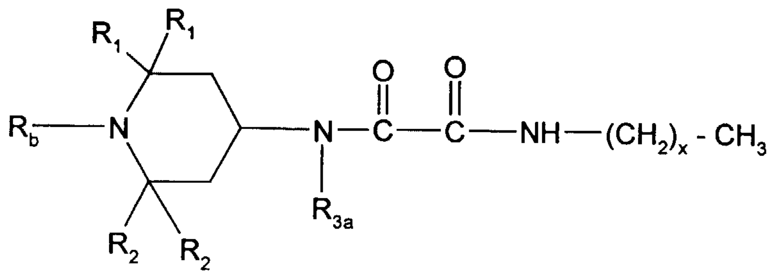

(IV k)

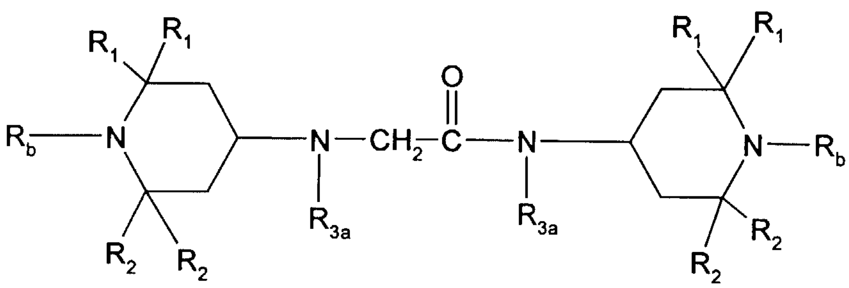

(IV l)

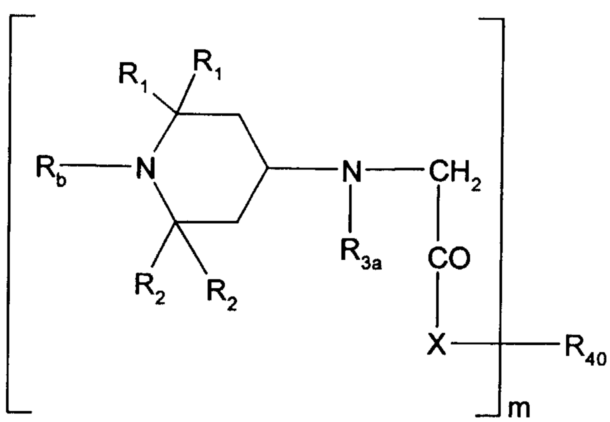

(IV m)

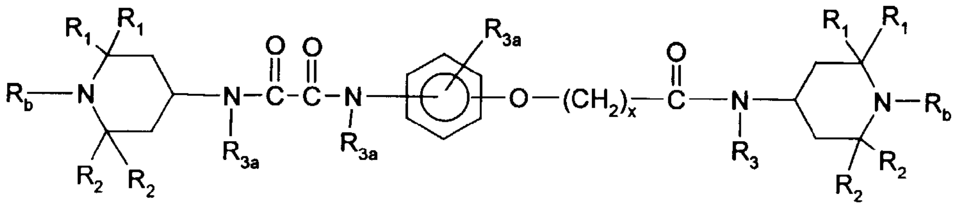

(IV n)

worin die Symbole die oben angegebene Bedeutung besitzen oder im Patentanspruch 2 definiert sind.

**5.** Eine Zusammensetzung gemäss den Patentansprüchen 3 oder 4, worin die Verbindung der Formel III den Formeln III' bis III'''

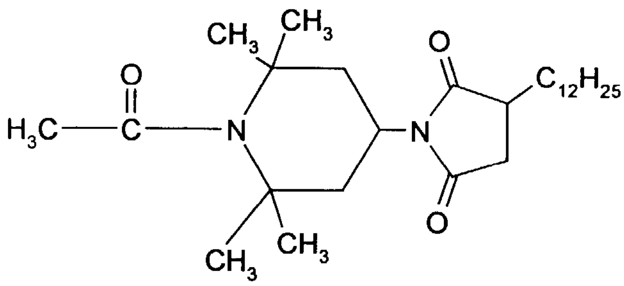

(III')

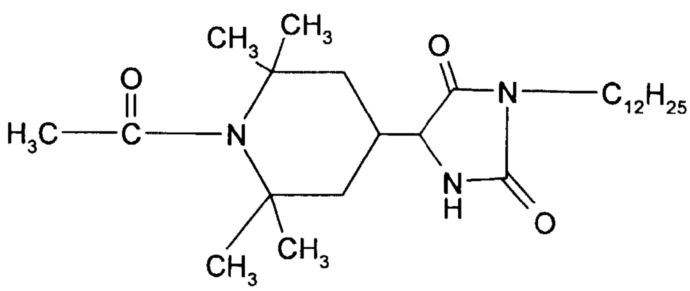

(III'')

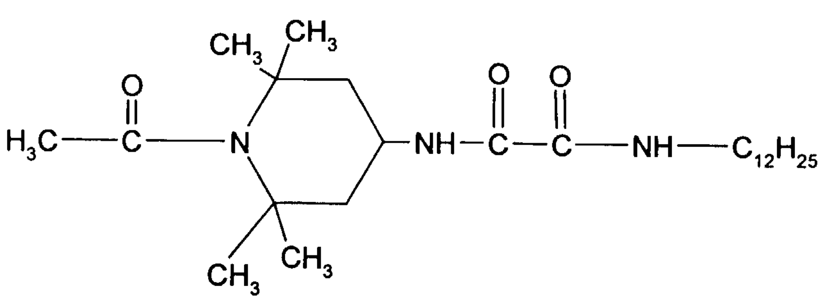

(III''')

und die Verbindung der Formel IV der Formel IV

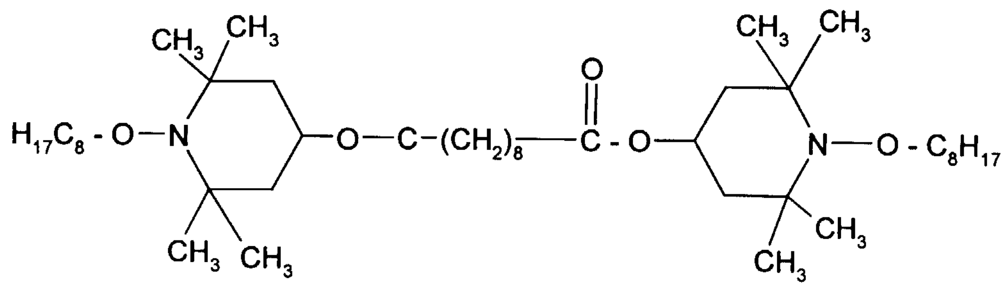

entspricht.

**6.** Eine Zusammensetzung, welche zur Stabilisierung einer polymeren Zusammensetzung gegen die Wirkungen von Licht geeignet ist, enthaltend

a) eine Verbindung mit einer N-acylierten 2,2,6,6-Tetraalkylpiperidinyl-Gruppe, die eine Spiro-Gruppe in 4-Stellung gebunden enthält (nachfolgend definiert als Komponente i); und

b) eine Verbindung mit einer N-acylierten 2,2,6,6-Tetraalkylpiperidinyl-Gruppe ohne Spiro-Gruppe in 4-Stellung (nachfolgend definiert als Komponente ii).

**7.** Eine Zusammensetzung gemäss Patentanspruch 6, worin

i) die Komponente i) eine Verbindung der Formel V ist

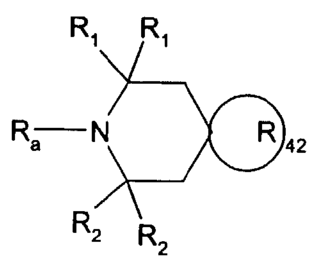

$R_a$ für -CO-$R_5$ steht;

$R_{42}$ zusammen mit dem C-Atom, an das es gebunden ist, eine Spiro-Gruppe bildet; und

ii) die Komponente ii) eine Verbindung der Formel VI ist

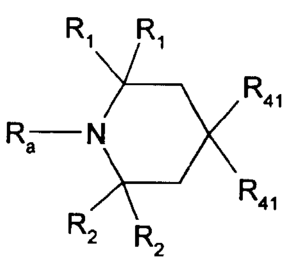

(VI)

worin jedes $R_{41}$ unabhängig ausgewählt ist aus Wasserstoff, einer Amino und Amid bildenden Gruppe, einer Ester und Ester bildenden Gruppe und einer Harnstoff und Urethan bildenden Gruppe; und die anderen Symbole die im Patentanspruch 2 angegebene Bedeutung besitzen.

**8.** Eine polymere Zusammensetzung enthaltend ein polymeres Material und eine Mischung der Komponente a) und der Komponente b), wie in den Patentansprüchen 1 bis 5 definiert, oder der Komponente i) und der Komponente ii), wie in den Patentansprüchen 6 oder 7 definiert.

**9.** Eine Methode zur Stabilisierung einer Lackzusammensetzung auf Basis von Acryl-, Alkyd- und/oder Polyesterharzen (welche, falls erwünscht, mit Melamin/Formaldehydharzen, Epoxidharzen oder Polyisocyanaten vernetzt werden können), gekennzeichnet durch das Aufnehmen einer Mischung der Komponente a) und der Komponente b), wie in den Patentansprüchen 1 bis 5 definiert, oder der Komponente i) und der Komponente ii), wie in den Patentansprüchen 6 oder 7 definiert, in das Harz, gegebenenfalls zusammen mit einem sauren Katalysator oder einer Verbindung, die einen sauren Katalysator freisetzen kann.

**10.** Eine Lackzusammensetzung auf Basis von Acryl-, Alkyd- und/oder Polyesterharzen (welche, falls erwünscht, mit Melamin/Formaldehydharzen, Epoxidharzen oder Polyisocyanaten vernetzt werden können), enthaltend eine Mischung der Komponente a) und der Komponente b), wie in den Patentansprüchen 1 bis 5 definiert, oder der Komponente i) und der Komponente ii), wie in den Patentansprüchen 6 oder 7 definiert, gegebenenfalls zusammen mit einem sauren Katalysator oder einer Verbindung, die einen sauren Katalysator freisetzen kann.

**11.** Eine Mischung, enthaltend

a) 10-90 Gew.% einer Verbindung, welche eine Gruppe der Formel I

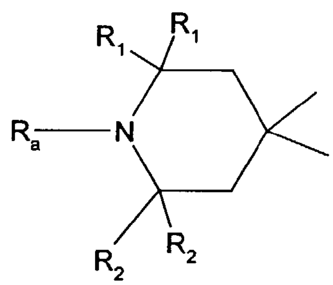

(I)

(nachfolgend als Komponente a) beschrieben) enthält,

b) 10-90 Gew.% einer Verbindung, welche eine Gruppe der Formel II

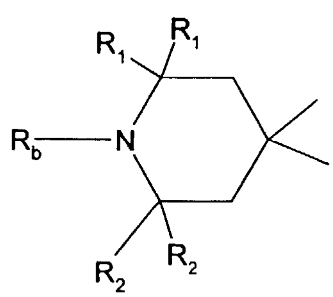

(II)

(nachfolgend als Komponente b) beschrieben) enthält,

worin $R_a$ für $-CO-R_5$ steht und $R_5$ unten definiert wird,

$R_b$ Sauerstoff; OH; $-O-CO-R_5$; $-O-C_{1-8}$Alkyl; -O-CO-Phenyl; $-O-C_{2-8}$Alkenyl oder $-COR_5$; $-O-C_{3-18}$Alkynyl; $-O-C_{5-12}$Cycloalkyl; $-O-C_{6-10}$Bicycloalkyl; $O-C_{5-8}$Cycloalkenyl, $-O-C_{6-10}$Aryl, $-O-R_{30}$, worin $R_{30}$ für unsubstituiertes oder durch $C_{1-4}$Alkyl oder Aryl monosubstituieres $C_{7-9}$Alkaryl steht; wobei $R_5$ für $C_{2-8}$Alkenyl, $-C(R_3)=CH_2$ (vorzugsweise), $C_{1-22}$ Alkyl, Phenyl, -CO-Phenyl, $-NR_7RO_8$, $-CH_2-C_6H_5$, $-CO-OC_{1-12}$Alkyl

oder -COOH steht; $R_7$ Wasserstoff, $C_{1-12}$Alkyl, $C_{5-6}$Cycloalkyl, Phenyl, Phenyl-$C_{1-4}$Alkyl oder $C_{1-12}$Alkylphenyl und $R_8$ $C_{1-12}$Alkyl oder Wasserstoff bedeuten, und

$R_3$ Wasserstoff oder $C_{1-4}$Alkyl ist;

jedes $R_1$ unabhängig für $-CH_3$ oder $-CH_2(C_{1-4}Alkyl)$ steht oder beide Gruppen $R_1$ eine Gruppe $-(CH_2)_5-$ bilden; und

jedes $R_2$ unabhängig für $-CH_3$ oder $-CH_2(C_{1-4}Alkyl)$ steht oder beide Gruppen $R_2$ eine Gruppe $-(CH_2)_5-$ bilden.

**12.** Die Verwendung einer Mischung gemäss Patentanspruch 11 zur Stabilisierung eines sauer katalysierten polymeren Lackes gegen die Wirkungen von Licht, wobei gleichzeitig gute Härtungseigenschaften vermittelt werden.

**Revendications**

**1.** Une composition, appropriée pour stabiliser une composition polymère contre les effets de la lumière, comprenant

a) un composé contenant un groupe 2,2,6,6-tétraalkylpipéridinyle N-acylé (ci-après HALS N-acylé); et

b) un composé contenant un groupe 2,2,6,6-tétraalkylpipéridinyle N-oxy-substitué (ci-après HALS N-oxy-substitué).

**2.** Une composition comprenant

a) de 5 à 95% en poids d'un composé contenant un groupe de formule I

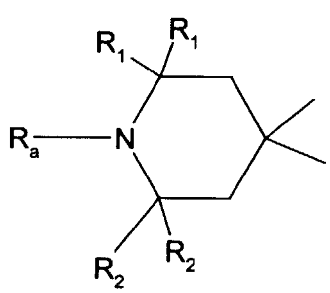

(I)

(défini ci-après comme composant a))

b) de 5 à 95% en poids d'un composé contenant un groupe de formule II

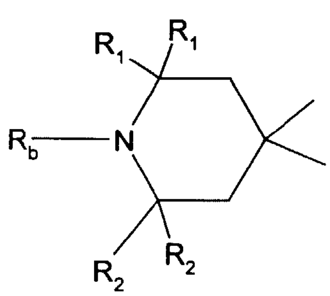

(II)

(défini ci-après comme composant b))
formules dans lesquelles

$R_a$ signifie -CO-$R_5$, où $R_5$ signifie un groupe alcényle en $C_2$-$C_8$, -C($R_3$)=$CH_2$, alkyle en $C_1$-$C_{22}$, phényle, -CO-phényle, -$NR_7R_8$, -$CH_2$-$C_6H_5$, -CO-O-alkyle en $C_1$-$C_{12}$ ou -COOH; $R_7$ signifie l'hydrogène ou un groupe alkyle en $C_1$-$C_{12}$, cycloalkyle en $C_5$-$C_6$, phényle, phényl-alkyle en $C_1$-$C_4$ ou alkyl en $C_1$-$C_{12}$-phényle et $R_8$ signifie un groupe alkyle en $C_1$-$C_{12}$ ou l'hydrogène, et

$R_b$ signifie l'oxygène; OH; -O-CO-$R_5$; -O-alkyle en $C_1$-$C_8$; -O-CO-phényle; -O-alcényle en $C_2$-$C_8$; -O-alcynyle en $C_3$-$C_{18}$; -O-cycloalkyle en $C_5$-$C_{12}$; -O-bicyclo-alkyle en $C_6$-$C_{10}$; -O-cycloalcényle en $C_5$-$C_8$; -O-aryle en $C_6$-$C_{10}$, -O-$R_{30}$ où $R_{30}$ signifie un groupe alkaryle en $C_7$-$C_9$ non substitué ou monosubstitué par un groupe alkyle en $C_1$-$C_4$ ou aryle; où $R_5$ signifie un groupe alcényle en $C_2$-$C_8$, -C($R_3$)=$CH_2$ (de préférence), alkyle en $C_1$-$C_{22}$, phényle, -CO-phényle, -$NR_7R_8$, -$CH_2$-$C_6H_5$, -CO-O-alkyle en $C_1$-$C_{12}$ ou -COOH;

$R_3$ signifie l'hydrogène ou un groupe alkyle en $C_1$-$C_4$;

chaque $R_1$ signifie indépendamment -$CH_3$ ou -$CH_2$(alkyle en $C_1$-$C_4$), ou bien les deux groupes $R_1$ forment un groupe -$(CH_2)_5$-; et

chaque $R_2$ signifie indépendamment -$CH_3$ ou -$CH_2$(alkyle en $C_1$-$C_4$), ou bien les deux groupes $R_2$ forment un groupe -$(CH_2)_5$-;

les pourcentages étant basés sur la quantité de composant a) et b) dans le mélange.

**3.** Une composition selon l'une quelconque des revendications précédentes, dans laquelle

a) le composant a) est un composé de formule III

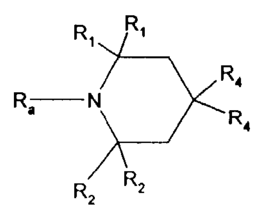

(III)

dans laquelle

$R_a$ signifie -CO-$R_5$; et

chaque $R_4$ est choisi indépendamment parmi l'hydrogène, un groupe hydroxy, un groupe éther, un groupe amino et un groupe formant un amide, un groupe ester et un groupe formant un ester et un groupe urée et un groupe formant un uréthane; ou bien les deux groupes $R_4$, ensemble avec l'atome de carbone auquel ils sont fixés, forment un groupe spiro; et

b) le composant b) est un composé de formule IV

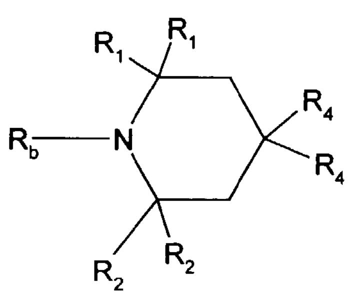

(IV)

dans laquelle

$R_b$ signifie l'oxygène; OH; -O-CO-$R_5$; -O-alkyle en $C_1$-$C_8$; -O-CO-phényle; -O-alcényle en $C_2$-$C_8$; -O-alcynyle en $C_3$-$C_{18}$; -O-cycloalkyle en $C_5$-$C_{12}$; -O-bicycloalkyle en $C_6$-$C_{10}$; -O-cycloalcényle en $C_5$-$C_8$, -O-aryle en $C_6$-$C_{10}$, -O-$R_{30}$ où $R_{30}$ signifie un groupe alkaryle en $C_7$-$C_9$ non substitué ou monosubstitué par un groupe alkyle en $C_1$-$C_4$ ou aryle; et

chaque $R_4$ est choisi indépendamment parmi l'hydrogène, un groupe hydroxy, un groupe éther, un groupe amino et un groupe formant un amide, un groupe ester et un groupe formant un ester et un groupe urée et un groupe formant un uréthane; ou bien les deux groupes $R_4$, ensemble avec l'atome de carbone auquel ils sont fixés, forment un groupe spiro; et les autres symboles sont tels que décrits à la revendication 2.

**4.** Une composition selon la revendication 3, dans laquelle le composé de formule III correspond aux formules IIIa à IIIn et le composé de formule IV aux formules IVa à IVn

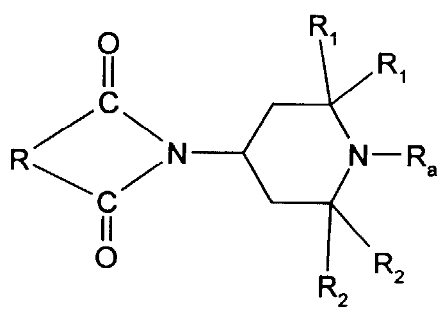

**(III a)**

formule dans laquelle R signifie un radical alkylène ou cycloalkylène saturé ou insaturé contenant de 2 à 20 atomes de carbone, éventuellement substitué par des groupes alkyle ou alcényle; et les autres symboles sont tels que définis plus haut;

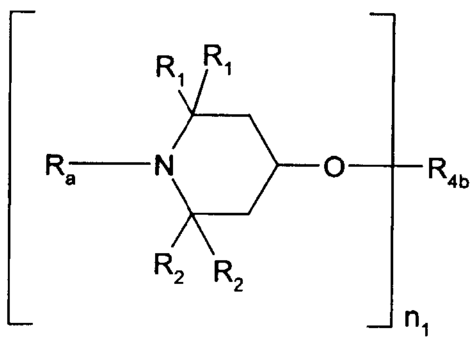

**(III b)**

formule dans laquelle ni est un nombre de 1 à 4 inclus, de préférence 1 ou 2;

$R_a$, $R_1$ et $R_2$ sont tels que définis à la revendication 2,

$R_{4b}$, lorsque $n_1$ = 1, signifie l'hydrogène; un groupe alkyle en $C_1$-$C_{18}$, éventuellement interrompu par un ou plusieurs atomes d'oxygène; un groupe cyanoéthyle; un groupe benzyle; un groupe glycidyle; le radical monovalent d'un acide carboxylique aliphatique, cycloaliphatique, araliphatique ou aromatique ou d'un acide carbamique; ou d'un acide contenant du phosphore ou un radical silyle monovalent, de préférence le radical d'un acide carboxylique aliphatique contenant de 2 à 18 atomes de carbone, d'un acide carboxylique cycloaliphatique contenant de 5 à 12 atomes de carbone ou d'un acide carboxylique aromatique contenant de 7 à 15 atomes de carbone;

$R_{4b}$, lorsque $n_1 = 2$, signifie un groupe alkylène en $C_1$-$C_{12}$, alcénylène en $C_4$-$C_{12}$, xylylène, le radical bivalent d'un acide dicarboxylique aliphatique, cycloaliphatique, araliphatique ou aromatique ou d'un acide dicarbamique ou d'un acide contenant du phosphore, ou un radical silyle bivalent, de préférence le radical d'un acide dicarboxylique aliphatique contenant de 2 à 36 atomes de carbone, d'un acide dicarboxylique cycloaliphatique ou aromatique contenant de 8 à 14 atomes de carbone, ou d'un acide dicarbamique aliphatique, cycloaliphatique ou aromatique contenant de 8 à 14 atomes de carbone;

$R_{4b}$, lorsque $n_1 = 3$, signifie le radical trivalent d'un acide tricarboxylique aliphatique, cycloaliphatique ou aromatique, d'un acide tricarbamique aromatique ou d'un acide contenant du phosphore, ou un radical silyle trivalent; et

$R_{4b}$, lorsque $n_1 = 4$, signifie le radical tétravalent d'un acide tétracarboxylique aliphatique, cycloaliphatique ou aromatique;

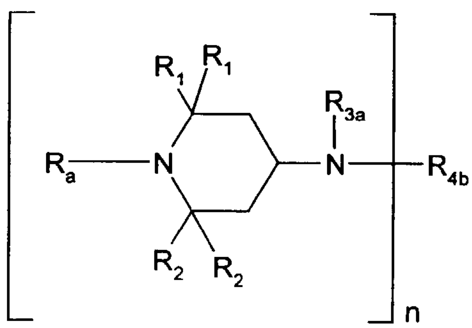

(III c)

formule dans laquelle n signifie le nombre 1 ou 2;

$R_a$, $R_1$ et $R_2$ sont tels que définis plus haut;

$R_{3a}$ signifie l'hydrogène, un groupe alkyle en $C_1$-$C_{12}$, cycloalkyle en $C_5$-$C_7$, aralkyle en $C_7$-$C_8$, alcanoyle en $C_2$-$C_{18}$, alcénoyle en $C_3$-$C_5$, benzoyle ou un groupe de formule $-CH_2-CH(OH)-Z$ ou de formule -CONH-Z dans lesquelles Z signifie l'hydrogène ou un groupe méthyle ou phényle;

$R_{4a}$, lorsque n = 1, signifie l'hydrogène, un groupe alkyle en $C_1$-$C_{18}$, cycloalkyle en $C_5$-$C_7$, alcényle en $C_2$-$C_8$ non substitué ou substitué par un groupe cyano, carbonyle ou carbamide, ou signifie un groupe glycidyle, un groupe de formule $-CH_2-CH(OH)-Z$ ou de formule -CONH-Z dans lesquelles Z signifie l'hydrogène ou un groupe méthyle ou phényle;

$R_{4a}$, lorsque n = 2, signifie un groupe alkylène en $C_2$-$C_{12}$, arylène en $C_6$-$C_{12}$, xylylène, un groupe $-CH_2-CH(OH)-CH_2-$ ou $-CH_2-CH(OH)-CH_2-O-X-O-CH_2-CH(OH)-CH_2-$ où X signifie un groupe alkylène en $C_2$-$C_{10}$, arylène en $C_6$-$C_{15}$ ou cycloalkylène en $C_6$-$C_{12}$;

ou bien, à condition que $R_{3a}$ ne signifie pas un groupe alcanoyle, alcénoyle ou benzoyle, $R_{4a}$ peut également signifier le radical bivalent d'un acide dicarboxylique aliphatique, cycloaliphatique ou aromatique ou d'un acide dicarbamique, ou peut signifier le groupe -CO-, ou bien $R_{3a}$ et $R_{4a}$ peuvent signifier ensemble, lorsque n = 1, le radical cyclique d'un acide 1,2- ou 1,3-dicarboxylique aliphatique ou aromatique;

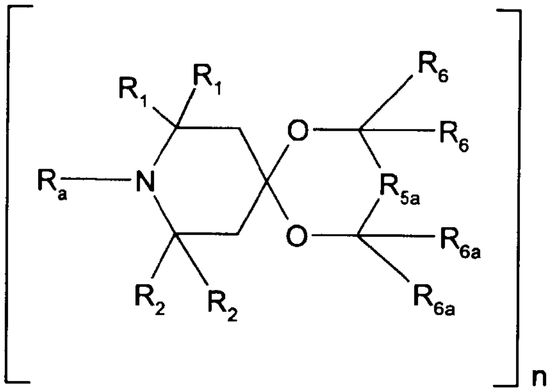

(III d)

formule dans laquelle n signifie le nombre 1 ou 2;

$R_a$, $R_1$ er $R_2$ sont tels que définis plus haut;

$R_{5a}$, lorsque n = 1, signifie un groupe alkylène ou hydroxyalkylène en $C_2$-$C_8$ ou acyloxy en $C_4$-$C_{22}$ -alkylène;

$R_{5a}$, lorsque n = 2, signifie le groupe $(-CH_2)_2C(CH_2-)_2$;

$R_6$ signifie l'hydrogène ou bien les deux groupes $R_6$ forment un groupe =O;

$R_{6a}$ signifie l'hydrogène ou bien les deux groupes $R_{6a}$ forment un groupe =O;

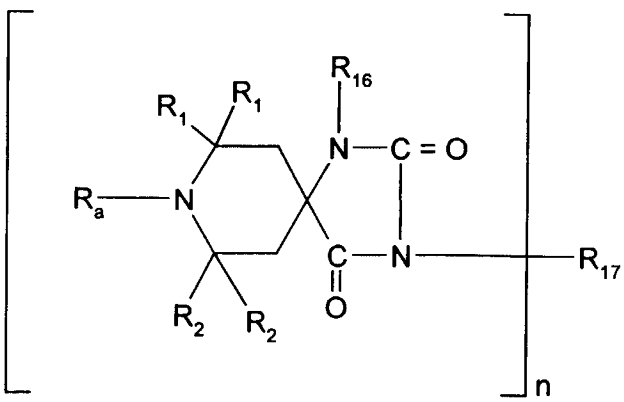

(III e)

formule dans laquelle n signifie le nombre 1 ou 2;

$R_a$, $R_1$ et $R_2$ sont tels que définis plus haut;

$R_{16}$ signifie l'hydrogène ou un groupe alkyle en $C_1$-$C_{12}$, allyle, benzyle, glycidyle ou alcoxyalkyle en $C_2$-$C_6$;

$R_{17}$, lorsque n = 1, signifie l'hydrogène, un groupe alkyle en $C_1$-$C_{12}$, alcényle en $C_3$-$C_5$, aralkyle en $C_7$-$C_9$, cycloalkyle en $C_5$-$C_7$, hydroxyalkyle en $C_2$-$C_4$, alcoxyalkyle en $C_2$-$C_6$, aryle en $C_6$-$C_{10}$, glycidyle, un groupe de formule $-(CH_2)_m$-COO-Q ou de formule $-(CH_2)_m$-O-CO-Q dans lesquelles m signifie 1 ou 2 et Q signifie un groupe alkyle en $C_1$-$C_{22}$, alcényle en $C_2$-$C_{22}$ ou phényle; ou un groupe de formule $-CH_2-CH(CH_3)$-COO-Q ou de formule $-CH_2-CH(CH_3)$-O-CO-Q et Q est tel que défini plus haut;

$R_{17}$, lorsque n = 2, signifie un groupe alkylène en $C_2$-$C_{12}$, arylène en $C_6$-$C_{12}$, un groupe $-CH_2-CH(OH)-CH_2-O-X-CH_2-CH(OH)-CH_2-$ où X signifie un groupe alkylène en $C_2$-$C_{10}$, arylène en $C_6$-$C_{15}$ ou cycloalkylène en $C_6$-$C_{12}$, ou un groupe de formule $-CH_2-CH(OZ')-CH_2-(OCH_2-CH(OZ')-CH_2)_2-$ dans laquelle Z' signifie l'hydrogène, un groupe alkyle en $C_1$-$C_{18}$, allyle, benzyle, alcanoyle en $C_2$-$C_{12}$ ou benzoyle; ou le radical bivalent d'un acide dicarboxylique aliphatique, cycloaliphatique, araliphatique ou aromatique;

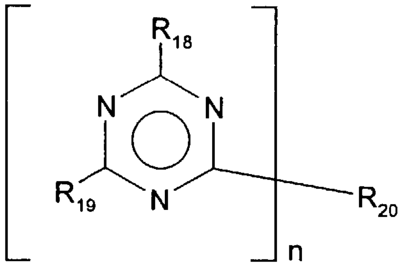

(III f)

formule dans laquelle n signifie le nombre 1 ou 2;

$R_{18}$ signifie un groupe de formule

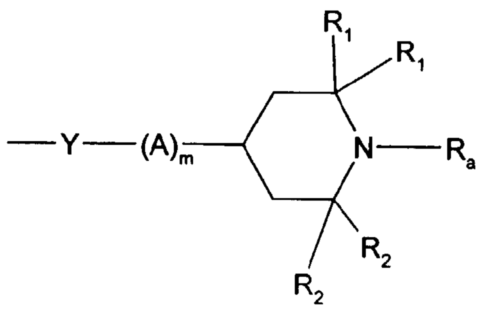

où $R_a$, $R_1$ et $R_2$ sont tels que définis plus haut;

Y signifie -O-; -$NR_{21}$- ou -$NR_{21}$-CO-CO-$NR_{21}$-;

A signifie un groupe alkylène en $C_2$-$C_6$;

m signifie 0 ou 1;

$R_{19}$ est choisi parmi l'un des groupes -$R_{18}$, -$NHR_{21}$, -$R_{22}$, -$OR_{23}$, -$NHCH_2OR_{23}$ et -$N(CH_2OR_{23})_2$;

$R_{20}$, lorsque n = 1, est un groupe choisi parmi $R_{18}$ et $R_{19}$;

$R_{20}$, lorsque n = 2, signifie le groupe -Y-$Q_1$-Y- où $Q_1$ signifie un groupe alkylène en $C_2$-$C_6$ éventuellement interrompu par -$N(R_{24})$-;

$R_{21}$ signifie l'hydrogène, un groupe alkyle en $C_1$-$C_{12}$, cyclohexyle, benzyle ou hydroxyalkyle en $C_1$-$C_4$, ou un groupe de formule

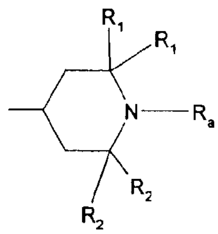

$R_{22}$ signifie un groupe alkyle en $C_1$-$C_{12}$, cyclohexyle, benzyle ou hydroxyalkyle en $C_1$-$C_4$;

$R_{23}$ signifie l'hydrogène ou un groupe alkyle en $C_1$-$C_{12}$ ou phényle;

$R_{24}$ signifie l'hydrogène ou le groupe $-CH_2OR_{23}$;

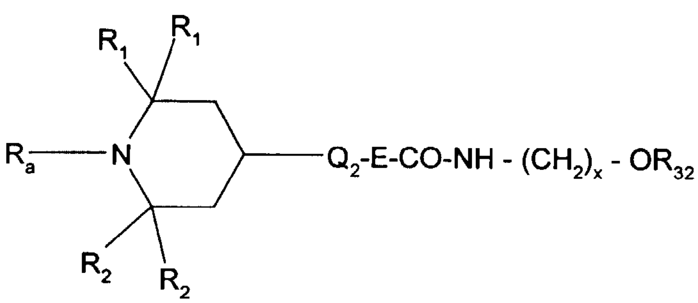

(III g)

formule dans laquelle x est un nombre entier de 1 à 6 inclus;

$R_a$, $R_1$ et $R_2$ sont tels que définis plus haut;

$Q_2$ signifie $-N(R_{31})-$ ou -O-;

E signifie un groupe alkylène en $C_1$-$C_3$, le groupe $-CH_2-CH(R_{34})-O-$ où $R_{34}$ signifie l'hydrogène, un groupe méthyle ou phényle, le groupe $-(CH_2)_3-NH-$ ou une simple liaison ou -CO-;

$R_a$ est tel que défini plus haut;

$R_{32}$ signifie l'hydrogène ou un groupe alkyle en $C_1$-$C_{18}$;

$R_{31}$ signifie l'hydrogène, un groupe alkyle en $C_1$-$C_{18}$, cycloalkyle en $C_5$-$C_7$, aralkyle en $C_7$-$C_{12}$, cyanoéthyle, aryle en $C_6$-$C_{10}$, le groupe $-CH_2-CH(R_{4a})-OH$ où $R_{4a}$ a la signification donnée plus haut (lorsque n = 1), un groupe de formule

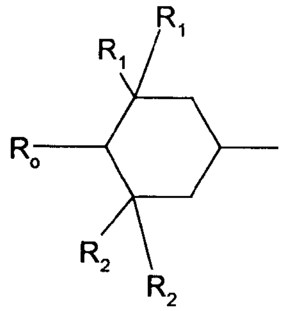

où $R_0$ a la signification de $R_a$; ou un groupe de formule

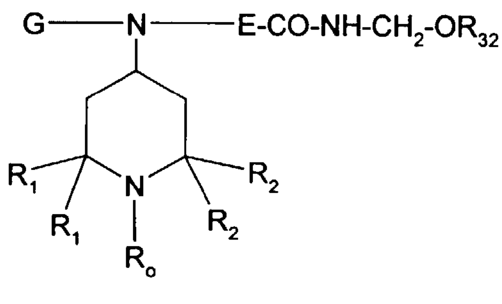

où G peut être un groupe alkylène en $C_2$-$C_6$ ou arylène en $C_6$-$C_{12}$ et E, $R_a$, $R_1$, $R_2$, $R_0$ et $R_{32}$ sont tels que définis plus haut;

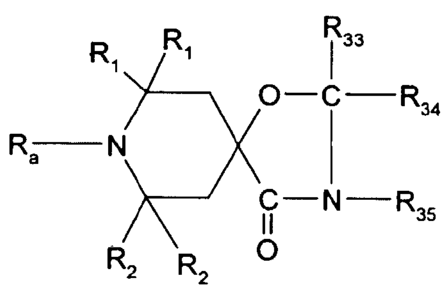

(III h)

formule dans laquelle $R_a$, $R_1$ et $R_2$ sont tels que définis plus haut;

$R_{33}$ et $R_{34}$ signifient indépendamment l'hydrogène, un groupe alkyle en $C_1$-$C_{30}$ ou benzyle ou bien $R_{33}$ signifie l'hydrogène ou un groupe alkyle en $C_1$-$C_4$ et $R_{34}$ signifie un groupe phényle, (alkyl en $C_1$-$C_4$)-phényle, chlorophényle, 4-hydroxy-3,5-t-butylphényle ou naphtyle; ou bien $R_{33}$ et $R_{34}$, ensemble avec l'atome de carbone auquel ils sont fixés, forment un cycle cycloalkylidène en $C_5$-$C_{15}$ non substitué ou substitué par un groupe alkyle en $C_1$-$C_4$ ou forment un groupe de formule

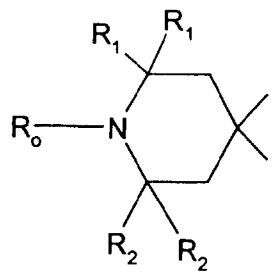

$R_{35}$ signifie l'hydrogène, un groupe alkyle en $C_1$-$C_{20}$, alcényle en $C_2$-$C_{20}$ ou -CH($R_{36}$)-CH($R_{37}$)-COO$R_{38}$ où $R_{36}$ signifie l'hydrogène, un groupe méthyle, phényle ou -COO-alkyle en $C_1$-$C_{21}$;

$R_0$ est tel que défini plus haut;

$R_{37}$ signifie l'hydrogène ou un groupe méthyle et $R_{38}$ signifie l'hydrogène, un groupe alkyle en $C_1$-$C_{21}$ ou alcényle en $C_2$-$C_{22}$ non substitué ou monosubstitué par un groupe phényle ou naphtyle et qui peut être interrompu par de l'oxygène ou par un groupe (alkyl en $C_1$-$C_4$)-imino; un groupe phényle; un groupe (alkyl en $C_1$-$C_{12}$)-phényle; un groupe cycloalkyle en $C_5$-$C_{12}$ ou un reste hydrocarboné aliphatique saturé contenant de 2 à 20 atomes de carbone qui peut être interrompu par de l'oxygène ou par un groupe (alkyl en $C_1$-$C_4$)-imino et qui est substitué par 1 à 3 groupes choisis parmi les groupes (alkyl en $C_1$-$C_{21}$)COO- et les groupes de formule

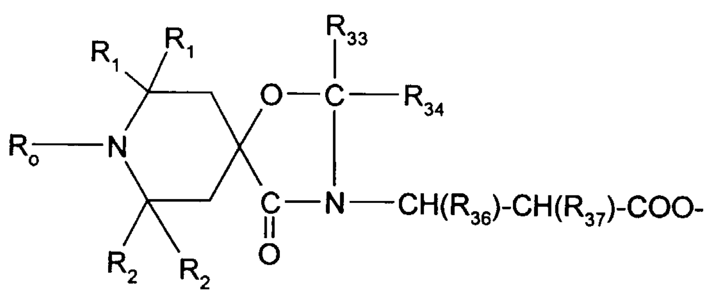

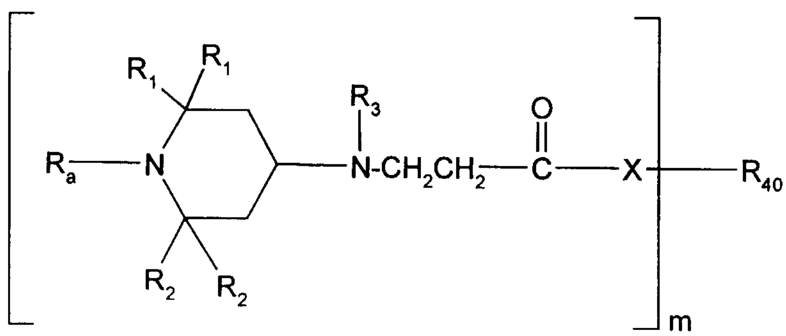

(III i)

formule dans laquelle $R_a$, $R_1$, $R_2$ et $R_3$ sont tels que définis plus haut;

X signifie -O-, -NH- ou -N(alkyle en $C_1$-$C_4$)- et

$R_{40}$ signifie un groupe aliphatique saturé ou insaturé, non substitué ou substitué par un ou deux groupes choisis parmi les groupes -OH et alcoxy en $C_1$-$C_4$, et qui peut être interrompu par un atome d'oxygène ou de soufre; ou un groupe aromatique, non substitué ou substitué par un ou deux groupes choisis parmi les groupes -OH, alkyle en $C_1$-$C_4$ et alcoxy en $C_1$-$C_4$;

m signifie un nombre entier de 1 à 4 inclus;

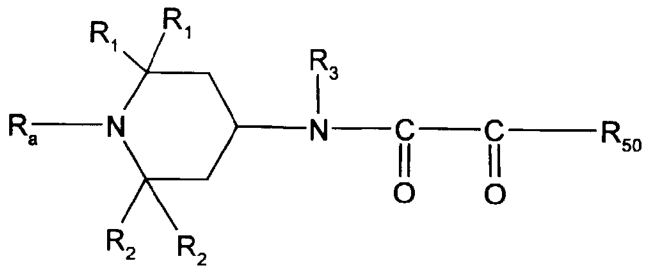

(III j)

formule dans laquelle $R_a$, $R_1$, $R_2$ et $R_3$ sont tels que définis plus haut et $R_{50}$ signifie un groupe formant un amide ou un ester;

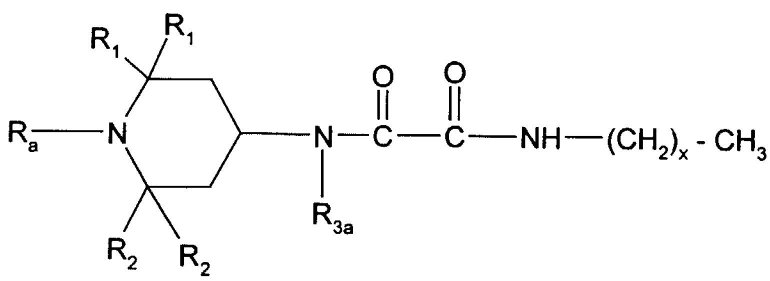

(III k)

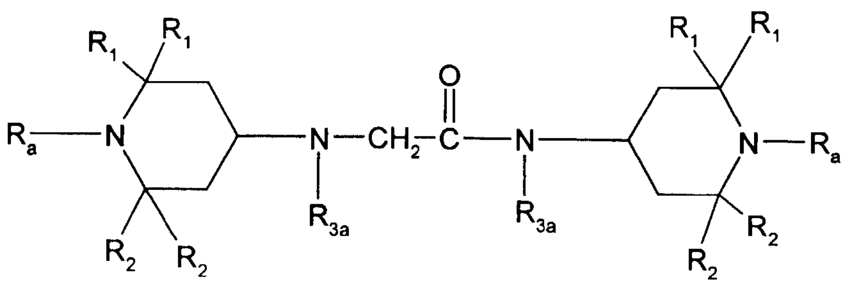

(III l)

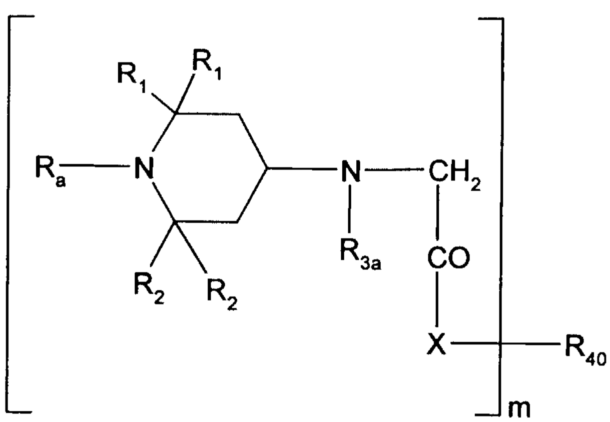

(III m)

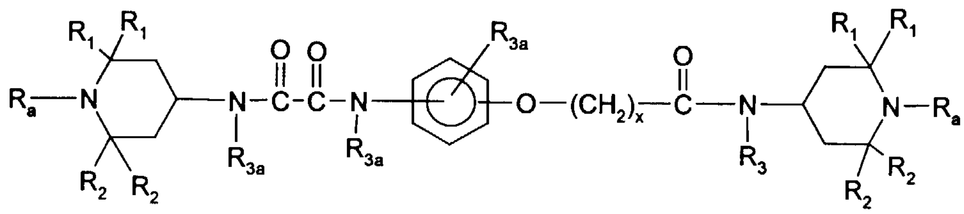

(III n)

formules dans lesquelles les symboles sont tels que définis plus haut;

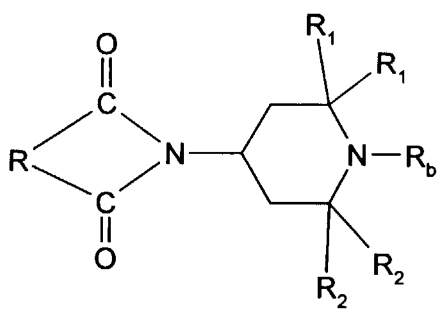

(IV a)

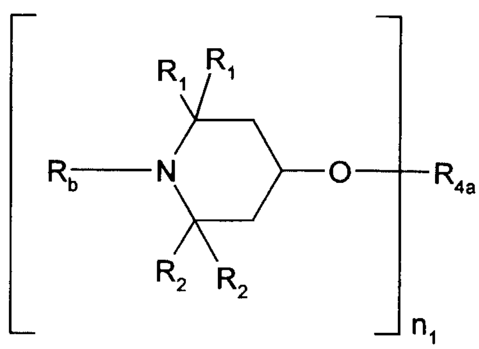

(IV b)

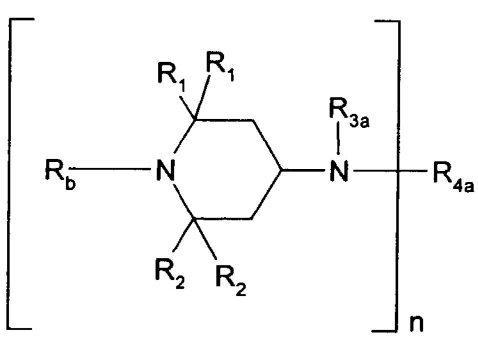

(IV c)

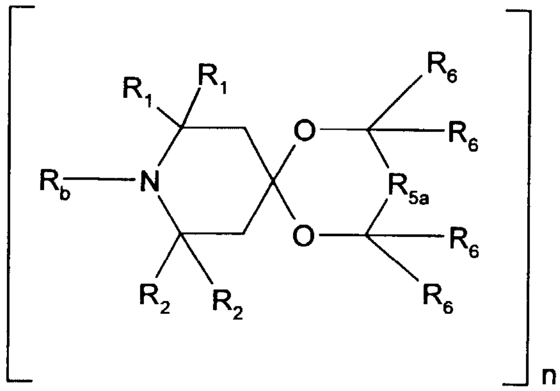

(IV d)

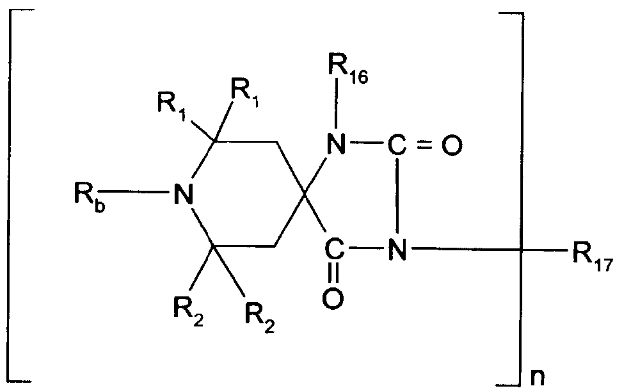

(IV e)

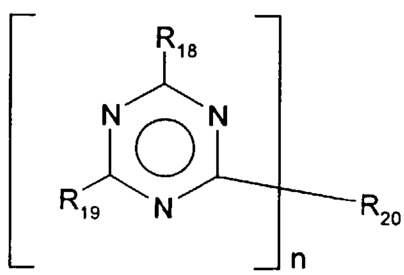

(IV f)

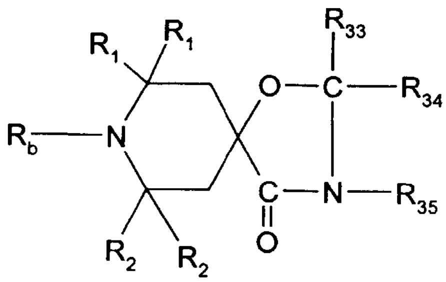

(IV g)

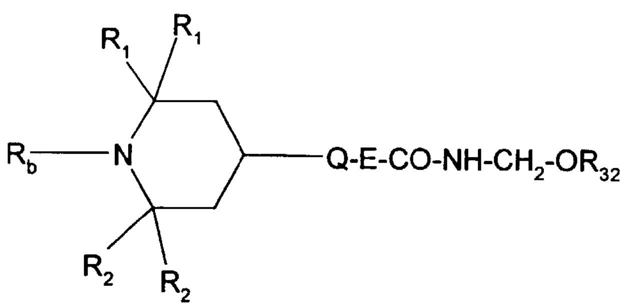

(IV h)

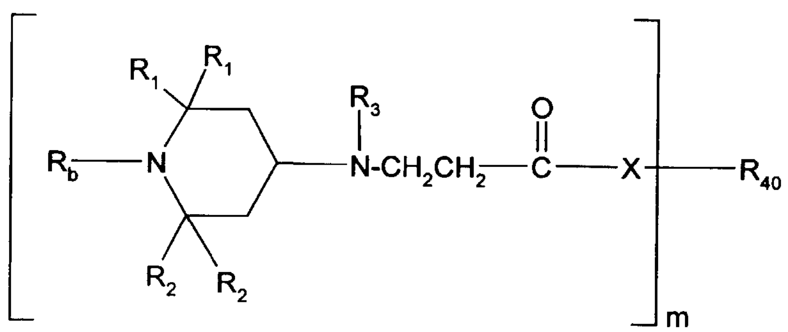

(IV i)

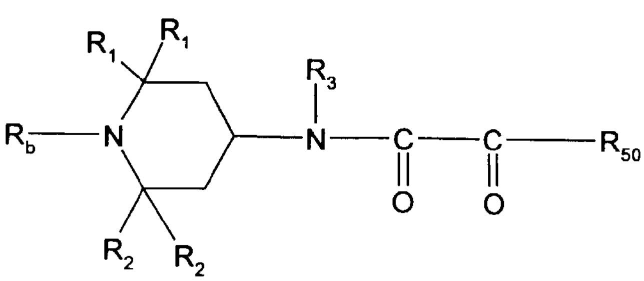

(IV j)

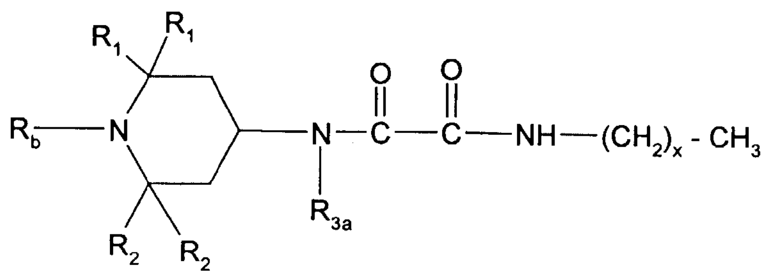

(IV k)

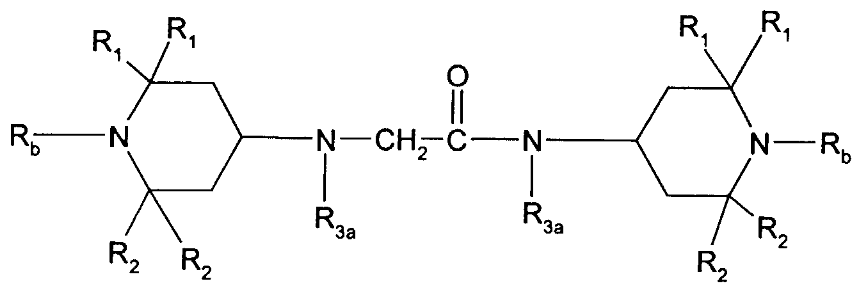

(IV l)

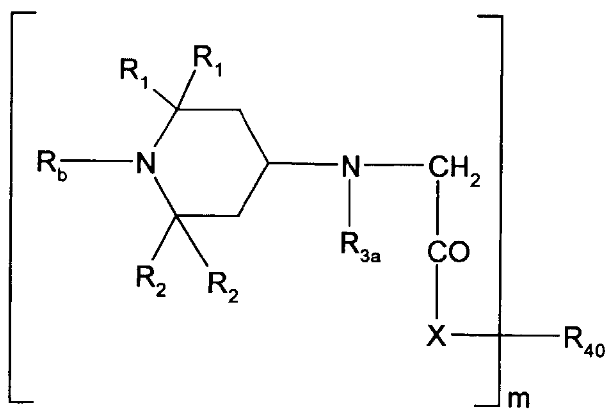

(IV m)

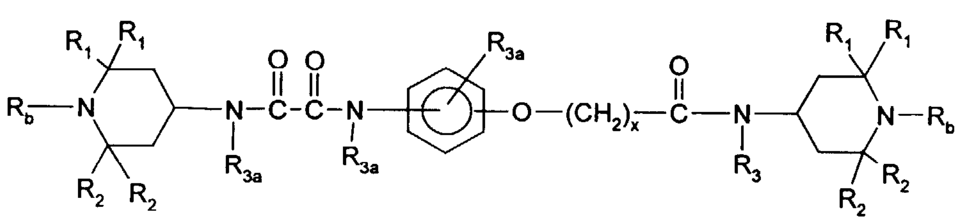

(IV n)

formules dans lesquelles les symboles sont tels que définis plus haut ou sont définis à la revendication 2.

**5.** Une composition selon la revendication 3 ou 4, dans laquelle le composé de formule III correspond aux formules III' à III'''

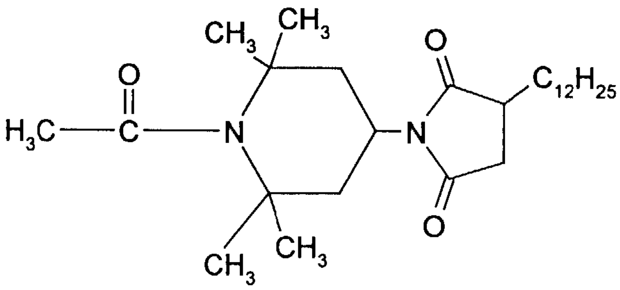

(III')

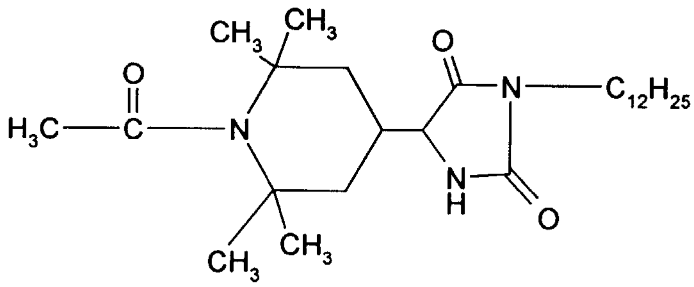

(III'')

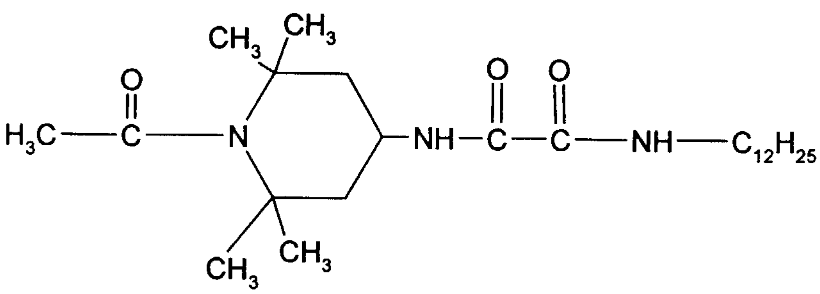

(III''')

et le composé de formule IV correspond à la formule IV'

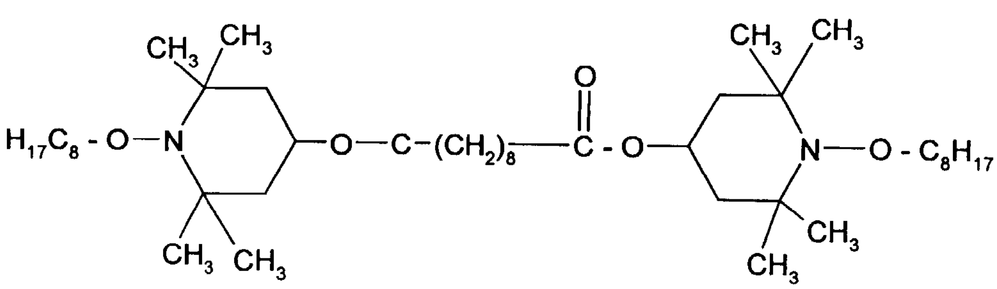

**6.** Une composition, appropriée pour stabiliser une composition polymère contre les effets de la lumière, comprenant

a) un composé contenant un groupe 2,2,6,6-tétraalkylpipéridinyle N-acylé, dans lequel un groupe spiro est fixé en position 4 (défini ci-après comme composant i)); et

b) un composé contenant un groupe 2,2,6,6-tétraalkylpipéridinyle N-acylé, dans lequel aucun groupe spiro n'est présent en position 4 (défini ci-après comme composant il)).

**7.** Une composition selon la revendication 6, dans laquelle

i) le composant i) est un composé de formule V

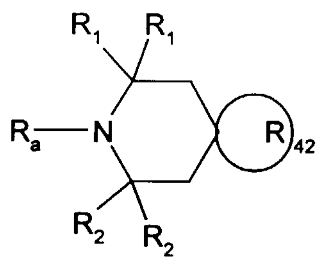

dans laquelle $R_a$ signifie -CO-$R_5$;
$R_{42}$, ensemble avec l'atome de carbone auquel il est fixé, forme un groupe spiro; et

il) le composant il) est un composé de formule VI

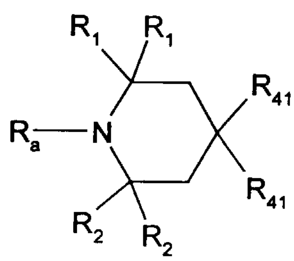

(VI)

dans laquelle chaque $R_{41}$ est choisi indépendamment parmi l'hydrogène, un groupe amino et un groupe formant un amide, un groupe ester et un groupe formant un ester et un groupe urée et un groupe formant un uréthane; et les autres symboles sont tels que définis à la revendication 2.

**8.** Une composition polymère comprenant une matière polymère et un mélange de composant a) et de composant b) définis aux revendications 1 à 5, ou de composant i) et de composant ii) définis à la revendication 6 ou 7.

**9.** Un procédé pour stabiliser une composition de vernis à base de résines acryliques, alkydes et/ou polyester (qui peuvent, si on le désire, être réticulées avec des résines mélamine/formaldéhyde, des résines époxy ou des polyisocyanates), qui comprend l'incorporation dans la résine d'un mélange de composant a) et de composant b) définis aux revendications 1 à 5 ou de composant i) et de composant il) définis à la revendication 6 ou 7, éventuellement ensemble avec un catalyseur acide ou un composé capable de libérer un catalyseur acide.

**10.** Une composition de vernis à base de résines acryliques, alkydes et/ou polyester (qui peuvent, si on le désire, être réticulées avec des résines mélamine/formaldéhyde, des résines époxy ou des polyisocyanates) contenant un mélange de composant a) et de composant b) définis aux revendications 1 à 5 ou de composant i) et de composant il) définis à la revendication 6 ou 7, éventuellement ensemble avec un catalyseur acide ou un composé capable de libérer un catalyseur acide.

**11.** Un mélange comprenant

a) de 10 à 90% en poids d'un composé contenant un groupe de formule I

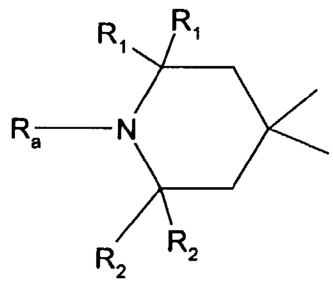

(I)

(décrit ci-après comme composant a))

b) de 10 à 90% en poids d'un composé contenant un groupe de formule II

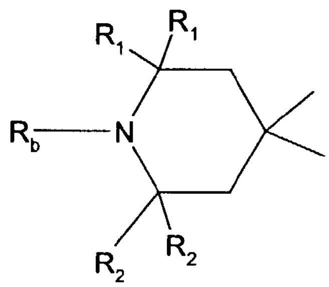

(II)

(décrit ci-après comme composant b))
formules dans lesquelles $R_a$ signifie -CO-$R_5$, où $R_5$ est défini ci-après,

$R_b$ signifie l'oxygène; OH; -O-CO-$R_5$; -O-alkyle en $C_1$-$C_8$; -O-CO-phényle; -O-alcényle en $C_2$-$C_8$ ou -$COR_5$; -O-alcynyle en $C_3$-$C_{18}$; -O-cycloalkyle en $C_5$-$C_{12}$; -O-bicycloalkyle en $C_6$-$C_{10}$; -O-cycloalcényle en $C_5$-$C_8$; -O-aryle en $C_6$-$C_{10}$; -O-$R_{30}$ où $R_{30}$ signifie un groupe alkaryle en $C_7$-$C_9$ non substitué ou monosubstitué par un groupe alkyle en $C_1$-$C_4$ ou aryle; où $R_5$ signifie un groupe alcényle en $C_2$-$C_8$, -$C(R_3)=CH_2$ (de préférence), alkyle en $C_1$-$C_{22}$, phényle, -CO-phényle, -$NR_7R_8$, -$CH_2$-$C_6H_5$, -CO-O-alkyle en $C_1$-$C_{12}$ ou -COOH; $R_7$ signifie l'hydrogène, un groupe alkyle en $C_1$-$C_{12}$, cycloalkyle en $C_5$-$C_6$, phényle, phényl-alkyle en $C_1$-$C_4$ ou alkyl en $C_1$-$C_{12}$-phényle et $R_8$ signifie un groupe alkyle en $C_1$-$C_{12}$ ou l'hydrogène, et

$R_3$ signifie l'hydrogène ou un groupe alkyle en $C_1$-$C_4$;

chaque $R_1$ signifie indépendamment -$CH_3$ ou -$CH_2$(alkyle en $C_1$-$C_4$) ou bien les deux groupes $R_1$ forment un groupe -$(CH_2)_5$-; et

chaque $R_2$ signifie indépendamment -$CH_3$ ou -$CH_2$(alkyle en $C_1$-$C_4$) ou bien les deux groupes $R_2$ forment un groupe -$(CH_2)_5$-.

**12.** L'utilisation d'un mélange selon la revendication 11, pour stabiliser contre les effets de la lumière un vernis obtenu par polymérisation en présence d'un catalyseur acide, tout en fournissant en même temps de bonnes propriétés de durcissement.